# EUROPEAN PATENT APPLICATION

(11) **EP 4 296 396 A1**
(43) Date of publication of application: **27.12.2023**
(21) Application number: 22780609.8
(22) Date of filing: 25.03.2022
(51) Int. Cl.: C22C 38/00, C21D 9/46, C22C 38/60

(54) **STEEL PLATE, METHOD FOR PRODUCING STEEL PLATE, AND METHOD FOR PRODUCING INTERMEDIATE STEEL PLATE**

(30) Priority: 31.03.2021 JP 2021060949; 31.03.2021 JP 2021060950
(71) Applicant: NIPPON STEEL CORPORATION, Chiyoda-ku Tokyo 100-8071 (JP)
(72) Inventor: TAKEDA, Kengo, Tokyo 100-8071 (JP); NAKANO, Katsuya, Tokyo 100-8071 (JP); ISHIKAWA, Kyohei, Tokyo 100-8071 (JP)
(74) Representative: Zimmermann & Partner Patentanwälte mbB
(86) International application number: PCT/JP2022/014552
(87) International publication number: WO 2022/210396

(57) **Abstract**

This steel plate has a predetermined composition in which the proportion of ferrite and bainite in total is 10 to 60%, the proportion of martensite and tempered martensite in total is 40 to 90%, the proportion of pearlite and retained austenite in total is 0 to 10%, the ratio of the number of crystal grains of the ferrite and the bainite having an area of 3 µm² or less to the total number of crystal grains of the ferrite and the bainite is 40% or more, a proportion of crystal grains of the ferrite and the bainite having an area of 30 µm² or more is 5% or less, and a difference ΔMn between an Mn concentration at a position of 1.0 µm from an interface of the ferrite and the martensite in a direction perpendicular to the interface inward into the ferrite grains and a maximum Mn concentration in a region up to 0.5 µm from the interface is 1.00 mass% or less.

## Description

### [Technical Field]

The present invention relates to a steel plate, a method for producing a steel plate, and a method for producing an intermediate steel plate.

Priority is claimed on Japanese Patent Application Nos. 2021-060949 and 2021-060950, filed March 31, 2021, the content of which is incorporated herein by reference.

### [Background Art]

In order to reduce the amount of carbon dioxide emitted from automobiles, there have been attempts to reduce the weight of automobile bodies while securing safety using high-strength steel plates.

For example, Patent Document 1 discloses, as a steel plate having excellent elongation, hole expandability, bending processability and delayed fracture resistance, a high-strength TRIP steel plate having a component composition containing, in mass%, C: 0.15 to 0.25%, Si: 1.00 to 2.20%, Mn: 2.00 to 3.50%, P: 0.05% or less, S: 0.005% or less, Al: 0.01 to 0.50%, N: 0.010% or less, and B: 0.0003 to 0.0050%, and one or two or more selected from among Ti: 0.005 to 0.05%, Cu: 0.003 to 0.50%, Ni: 0.003 to 0.50%, Sn: 0.003 to 0.50%, Co: 0.003 to 0.05%, and Mo: 0.003 to 0.50%, with the remainder being Fe and unavoidable impurities, wherein, regarding the microstructure, the volume fraction of ferrite having an average crystal grain size of 2 µm or less is 15% or less (including 0%), the volume fraction of retained austenite having an average crystal grain size of 2 µm or less is 2 to 15%, the volume fraction of martensite having an average crystal grain size of 3 µm or less is 10% or less (including 0%), the remainder is composed of bainite and tempered martensite having an average crystal grain size of 6 µm or less, and the average of 10 or more cementite particles with a grain size of 0.04 µm or more are contained in the bainite and tempered martensite grains.

Patent Document 2 discloses, as a steel plate having both high-strength (tensile strength (TS): 980 MPa or more) and excellent bendability, a high-strength cold-rolled steel plate having a specific component composition and a specific steel structure with an area proportion of a ferrite phase of 30% or more and 70% or less, an area proportion of a martensite phase of 30% or more and 70% or less, the average grain size of ferrite grains of 3.5 µm or less, a standard deviation of grain sizes of ferrite grains of 1.5 µm or less, the average aspect ratio of ferrite grains of 1.8 or less, the average grain size of martensite grains of 3.0 µm or less, and the average aspect ratio of martensite grains of 2.5 or less, and having a tensile strength of 980 MPa.

Patent Document 3 discloses, as a steel plate having a yield strength (YS) of 780 MPa or more, a tensile strength (TS) of 1,180 MPa or more, and excellent spot weldability, ductility and bending processability, a high-strength steel plate in which the C amount is 0.15% or less, the area proportion of ferrite is 8 to 45%, the area proportion of martensite is 55 to 85%, the ratio of martensite adjacent to only ferrite to the total structure is 15% or less, the average crystal grain size of ferrite and martensite is 10 µm or less, and the area proportion of ferrite having a crystal grain size of 10 µm or more among ferrite present in a range from the surface of the steel plate to a depth of 20 µm from the surface of the steel plate to a depth of 100 µm is less than 5%.

Patent Document 4 discloses, as a steel plate with little variations in mechanical properties (particularly, strength and ductility), a high-strength cold-rolled steel plate having a component composition containing, in mass%, C: 0.10 to 0.25%, Si: 0.5 to 2.0%, Mn: 1.0 to 3.0%, P: 0.1% or less, S: 0.01% or less, Al: 0.01 to 0.05%, and N: 0.01% or less, with the remainder being Fe and unavoidable impurities, and having a structure containing an area proportion of ferrite in a soft first phase of 20 to 50% and the remainder composed of tempered martensite and/or tempered bainite in a hard second phase, wherein, among all the ferrite particles, the total area of particles having an average particle size of 10 to 25 µm is 80% or more of the total area of all the ferrite particles, the number of dispersed cementite particles having a circle equivalent diameter of 0.3 µm or more present in all the ferrite particles is more than 0.15 and 1.0 or less per 1 µm² of the ferrite, and the tensile strength is 980 MPa or more.

### [Citation List]

### [Patent Document]

[Patent Document 1]
   PCT International Publication No. WO 2017/179372
[Patent Document 2]
   PCT International Publication No. WO 2016/194272
[Patent Document 3]
   Japanese Unexamined Patent Application, First Publication No. 2015-117404
[Patent Document 4]
   Japanese Unexamined Patent Application, First Publication No. 2013-245397

### [Summary of the Invention]

### [Problems to be Solved by the Invention]

Incidentally, steel plates used for automobile parts and the like often have punched holes, and the vicinity of the punched holes has undergone large local deformation during punch processing, and there is much damage such as voids. Such void damage tends to be the starting point for breakage. Generally, if the strength of the steel plate increases, the steel plate breaks more easily, but regions that have undergone large deformation such as edges of punched holes and punched end surfaces are significantly more likely to break. Therefore, it is difficult to achieve both strength and breaking resistance in steel plates (particularly, high-strength steel plates).

For high-strength steel plates, various methods have been proposed so far to simultaneously achieve strength, formability and bendability.

However, in Patent Documents 1 to 4, increasing strength and achieving both favorable ductility and bendability have been mentioned, but a technique for securing strength of a steel member having a punched end surface has not been disclosed. Particularly, in conventional steel plates (particularly, high-strength steel plates) including Patent Documents 1 to 4, breaking resistance could not be sufficiently improved.

An object of the present invention is to provide a steel plate that simultaneously satisfies having high levels of strength, formability and breaking resistance, a method for producing the same, and a method for producing an intermediate steel plate.

### [Means for Solving the Problem]

The inventors found that, when a steel plate has a metal structure containing ferrite, bainite, martensite, and tempered martensite, in which the metal structure may further contain pearlite and retained austenite, and ferrite and bainite among these metal structures are controlled to be finer, formability and breaking resistance of the steel plate are improved. In addition, they found that, when the Mn concentration in the vicinity of an interface between the ferrite and martensite is controlled, formation of voids in the vicinity of the edge of a punched hole formed by punch processing is delayed, and when the steel material containing the punched hole is additionally deformed, connection between voids is less likely to occur, and as a result, breakage can be curbed.

The present invention has been made based on the above findings, and the gist thereof is as follows.
(1) A steel plate according to one aspect of the present invention having a component composition containing, in mass%,
   C: 0.07 to 0.15%,
   Si: 0.01 to 2.0%,
   Mn: 1.5 to 3.0%,
   P: 0 to 0.020%,
   S: 0 to 0.0200%,
   Al: 0.001 to 1.000%,
   N: 0 to 0.020%,
   Co: 0 to 0.500%,
   Ni: 0 to 1.000%,
   Mo: 0 to 1.000%,
   Cr: 0 to 2.000%,
   O: 0 to 0.0200%,
   Ti: 0 to 0.50%,
   B: 0 to 0.0100%,
   Nb: 0 to 0.50%,
   V: 0 to 0.500%,
   Cu: 0 to 0.5%,
   W: 0 to 0.100%,
   Ta: 0 to 0.100%,
   Sn: 0 to 0.050%,
   Sb: 0 to 0.050%,
   As: 0 to 0.050%,
   Mg: 0 to 0.050%,
   Ca: 0 to 0.050%,
   Zr: 0 to 0.050%, and
   REM: 0 to 0.100%, with the remainder being Fe and impurities,
   wherein, regarding structure fractions,
   the area proportion of ferrite and bainite in total is 10% or more and 60% or less, the area proportion of martensite and tempered martensite in total is 40% or more and 90% or less, and the area proportion of pearlite and retained austenite in total is 0% or more and 10% or less,
   the ratio of the number of crystal grains of the ferrite and the bainite having an area of 3 µm² or less to the total number of crystal grains of the ferrite and the bainite is 40% or more,
   a proportion of crystal grains of the ferrite and the bainite having an area of 30 µm² or more is 5% or less, and
   a difference ΔMn between an Mn concentration at a position of 1.0 µm from an interface between the ferrite and the martensite in a direction perpendicular to the interface and inward into the ferrite grains and the maximum Mn concentration in a region up to 0.5 µm therefrom is 1.00 mass% or less.
(2) In the steel plate according to (1), the average aspect ratio of the crystal grains of the ferrite and the bainite having an area of 3 µm² or less may be 1.0 or more and 2.0 or less.
(3) In the steel plate according to (1) or (2), the average carbon concentration at a depth position of 10 µm in the plate thickness direction from the surface of the steel plate may be 0.800 times or less the average carbon concentration at a position at a depth of 1/4 in the plate thickness direction from the surface of the steel plate.
(4) In the steel plate according to any one of (1) to (3), the component composition may contain, in mass%, one or two or more of
   Co: 0.010 to 0.500%,
   Ni: 0.010 to 1.000%,
   Mo: 0.010 to 1.000%,
   Cr: 0.001 to 2.000%,
   O: 0.0001 to 0.0200%,
   Ti: 0.001 to 0.50%,
   B: 0.0001 to 0.0100%,
   Nb: 0.001 to 0.50%,
   V: 0.001 to 0.500%,
   Cu: 0.001 to 0.5%,
   W: 0.001 to 0.100%,
   Ta: 0.001 to 0.100%,
   Sn: 0.001 to 0.050%,
   Sb: 0.001 to 0.050%,
   As: 0.001 to 0.050%,
   Mg: 0.0001 to 0.050%,
   Ca: 0.001 to 0.050%,
   Zr: 0.001 to 0.050%, and
   REM: 0.001 to 0.100%.
(5) A method for producing an intermediate steel plate according to one aspect of the present invention includes:
   a hot rolling process in which a slab having a component composition containing, in mass%,
   C: 0.07 to 0.15%,
   Si: 0.01 to 2.0%,
   Mn: 1.5 to 3.0%,
   P: 0 to 0.020%,
   S: 0 to 0.0200%,
   Al: 0.001 to 1.000%,
   N: 0 to 0.020%,
   Co: 0 to 0.500%,
   Ni: 0 to 1.000%,
   Mo: 0 to 1.000%,
   Cr: 0 to 2.000%,
   O: 0 to 0.0200%,
   Ti: 0 to 0.50%,
   B: 0 to 0.0100%,
   Nb: 0 to 0.50%,
   V: 0 to 0.500%,
   Cu: 0 to 0.5%,
   W: 0 to 0.100%,
   Ta: 0 to 0.100%,
   Sn: 0 to 0.050%,
   Sb: 0 to 0.050%,
   As: 0 to 0.050%,
   Mg: 0 to 0.050%,
   Ca: 0 to 0.050%,
   Zr: 0 to 0.050%, and
   REM: 0 to 0.100%, with the remainder being Fe and impurities, is hot-rolled in a final finishing stand in a temperature range of 900°C or lower and at a plate thickness reduction rate of 30% or more to obtain a hot-rolled steel plate;
   a coiling process in which, after the hot rolling process, the hot-rolled steel plate is coiled at a coiling temperature of 650°C or lower and 450°C or higher;
   a holding process in which the hot-rolled steel plate after the coiling process is held in a temperature range from the coiling temperature to (the coiling temperature-50)°C for a holding time of 8 hours or shorter; and
   a cooling process in which the hot-rolled steel plate after the holding process is cooled to 300°C at the average cooling rate of 0.10 °C/sec or faster to obtain an intermediate steel plate.
(6) A method for producing a steel plate according to one aspect of the present invention, includes:
   a cold rolling process in which the intermediate steel plate produced according to the method for producing an intermediate steel plate according to (5) is cold-rolled at a plate thickness reduction rate of 20% or more and 80% or less to obtain a cold-rolled steel plate; and
   an annealing process in which the cold-rolled steel plate is held in an atmosphere with a dew point of -80°C or higher and 20°C or lower in a temperature range of 740°C to 900°C for 60 seconds or longer for annealing.
(7) In the method for producing a steel plate according to (6), the dew point may be higher than -15°C and 20°C or lower.
(8) In the method for producing a steel plate according to (6) or (7), in the annealing process, a coating layer forming process in which a coating layer containing zinc, aluminum, magnesium or an alloy thereof is formed on both surfaces of the steel plate may be performed.

### [Effects of the Invention]

According to the present invention, it is possible to provide a steel plate that simultaneously satisfies having high levels of strength, formability and breaking resistance, a method for producing the same, and a method for producing an intermediate steel plate. In addition, according to the present invention, it is possible to provide a steel plate having formability suitable for structural members of automobiles or the like and a high tensile strength (for example, a high tensile strength of 900 MPa or more).

### [Brief Description of Drawings]

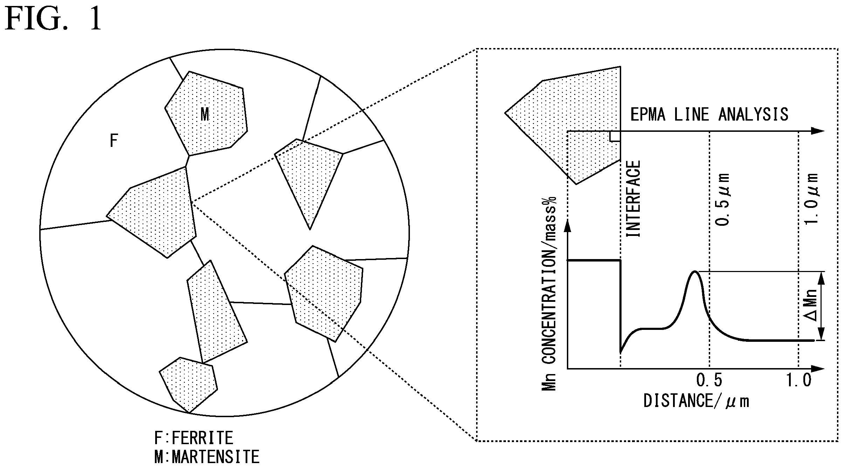

Fig. 1 is a schematic view illustrating a method for measuring an Mn concentration in the vicinity of an interface between ferrite and martensite in the present embodiment.

### [Embodiment(s) for implementing the Invention]

In one embodiment of the present invention, in a steel plate (particularly, in a high-strength steel plate having high tensile strength (for example, 900 MPa or more)), when the grain size of ferrite and bainite and an Mn concentration in the vicinity of an interface between ferrite and martensite in addition to an area proportion of a metal structure are controlled, strength, formability and breaking resistance are simultaneously achieved. In addition, in a preferable aspect of the present embodiment, additionally, when the average carbon concentration on the surface layer of the steel plate is set to be lower than the average carbon concentration at a position at a depth of 1/4 (1/4 depth position) in the plate thickness direction from the surface of the steel plate (specifically, a decarburized layer is formed on the surface layer of the steel plate), it is possible to simultaneously achieve strength, formability, bendability and breaking resistance.

Hereinafter, a steel plate according to one embodiment of the present invention will be described.

First, the metal structure of the steel plate according to the present embodiment will be described. Hereinafter, since the structure fraction is expressed in terms of area proportion, the unit "%" of the structure fraction means area%.

### <Metal structure>

### (Area proportion of ferrite and bainite: 10% or more and 60% or less)

Since ferrite and bainite have soft structures, they are easily deformed and contribute to improvement of elongation. If the total proportion of ferrite and bainite is 10% or more, sufficient elongation can be obtained, which contributes to improving formability. The area proportion of ferrite and bainite in total is preferably 20% or more, and more preferably 25% or more.

In order to secure the tensile strength, the total proportion of ferrite and bainite is 60% or less, and it is preferably 50% or less, and more preferably 45% or less.

### (Area proportion of martensite and tempered martensite: 40% or more and 90% or less)

Since martensite and tempered martensite have hard structures, they contribute to improvement of the tensile strength. If the total proportion of martensite and tempered martensite is 40% or more, the strength can be increased, and for example, a tensile strength of 900 MPa or more can be easily secured. The total proportion is preferably 45% or more, and more preferably 50% or more.

In addition, if the total proportion of martensite and tempered martensite is more than 90%, sufficient elongation cannot be obtained and formability deteriorates, and thus the total proportion is 90% or less, and preferably 80% or less, and more preferably 75% or less.

### (Area proportion of pearlite and retained austenite: 0% or more and 10% or less)

Pearlite has a structure containing hard cementite, and since it becomes the starting point for the formation of voids after punch processing, it deteriorates breaking resistance. In addition, retained austenite has a structure that contributes to improving elongation according to transformation induced plasticity (TRIP). However, martensite, which is generated by transformation induced plasticity of retained austenite, is very hard, and becomes the starting point for the formation of voids, which deteriorates breaking resistance. Therefore, the area proportion of pearlite and retained austenite in total is 10% or less, and preferably 5% or less. Here, in the present embodiment, pearlite and retained austenite may not be generated, and the area proportion of pearlite and retained austenite in total may be 0%.

### (Ratio of the number N₃ of crystal grains of the ferrite and the bainite having an area of 3 µm² or less to a total number N_{T} of crystal grains of the ferrite and the bainite is 40% or more)

The ratio (N₃/N_{T}) of the number N₃ of crystal grains of the ferrite and the bainite having an area of 3 m² or less to a total number N_{T} of crystal grains of the ferrite and the bainite is an index indicating the formability and breaking resistance of the steel plate in the present embodiment. If the ratio (N₃/N_{T}) of the number of crystal grains (fine grains) having an area of 3 µm² or less to the number of all crystal grains of the ferrite and the bainite is 40% or more, during punch processing and during deformation after punching, voids are less likely to be formed in the vicinity of punched holes or their end surfaces, the formed voids are unlikely to connect with each other, and breakage is unlikely to occur. Therefore, if the ratio (N₃/N_{T}) of the number of crystal grains of the ferrite and the bainite having an area of 3 µm² or less is 40% or more, breaking resistance becomes higher than that of automobile parts having the same level of strength. In addition, if the ratio (N₃/N_{T}) of the number of crystal grains of the ferrite and the bainite having an area of 3 µm² or less is less than 40%, it is difficult to sufficiently obtain the effect of improving breaking resistance. Therefore, the lower limit of the ratio (N₃/N_{T}) of the number of crystal grains having an area of 3 µm² or less is 40% or more, and preferably 50% or more, and more preferably 55% or more. Here, the upper limit of the ratio of the number of crystal grains of the ferrite and the bainite having an area of 3 µm² or less is not particularly set, and may be 100%, and may be 90% or less in order to reduce elongation at yield point.

### (Ratio of the number N₃₀ of crystal grains of the ferrite and the bainite having an area of 30 µm² or more to a total number N_{T} of crystal grains of the ferrite and the bainite is 5% or less)

The ratio (N₃₀/N_{T}) of the number N₃₀ of crystal grains of the ferrite and the bainite having an area of 30 µm² or more to a total number N_{T} of crystal grains of the ferrite and the bainite is an index indicating the formability and breaking resistance of the steel plate in the present embodiment. If the ratio of coarse crystal grains of the ferrite and the bainite having an area of 30 µm² or more is large, during punch processing and during deformation after punching, voids are likely to be formed in the vicinity of punched holes or their end surfaces, the formed voids are likely to be connected with each other, and breakage easily occurs. If the ratio (N₃₀/N_{T}) of the number of crystal grains of the ferrite and the bainite having an area of 30 µm² or more is more than 5%, the breaking resistance deteriorates compared with that of automobile parts having the same level of strength. Therefore, the upper limit of the ratio (N₃₀/N_{T}) of the number of crystal grains having an area of 30 µm² or more is 5% or less, and preferably 3% or less. Here, since a smaller ratio (N₃₀/N_{T}) of the number of crystal grains of the ferrite and the bainite having an area of 30 µm² or more is preferable, the lower limit is not particularly set, and may be 0%, or in order to reduce an increase in production cost associated with precise control, it may be 1% or more.

### (Difference ΔMn between an Mn concentration at a position of 1.0 µm from an interface between ferrite and martensite in a direction perpendicular to the interface and inward into ferrite grains and a maximum Mn concentration in a region up to 0.5 µm therefrom is 1.00 mass% or less)

As determined and shown in Fig. 1, a difference ΔMn ([Mn_{0.5}]-[Mn_{1.0}]) between an Mn concentration [Mn_{1.0}] at a position of 1.0 µm from an interface between ferrite and martensite in a direction perpendicular to the interface and inward into ferrite grains and a maximum value [Mn_{0.5}] of an Mn concentration in a region up to 0.5 µm therefrom is an index indicating easiness of formation of voids at the interface. Generally, when deformation is applied to a composite structure containing ferrite and martensite, deformation of soft ferrite occurs first. In this case, dislocations generated inside ferrite accumulate (pile-up) at the interface, which causes stress concentration at the interface. Here, examples of interfaces at which dislocations pile up include an interface between ferrite and ferrite and an interface between ferrite and martensite, and at the interface between ferrite and martensite, which has a large hardness difference, voids are likely to be formed due to stress concentration. Mn is an element that raises the ductile-brittle transition temperature and makes breakage easily occur (reference: Tanaka et al., Tetsu-to-Hagane, Vol. 100 (2014) No. 10), and if the Mn concentration in the vicinity of the interface at which voids are easily formed, that is, the interface between ferrite and martensite, is high, during punch processing and during deformation after punch processing, the formation of voids in the vicinity of the interface is promoted. The Mn concentration [Mn_{1.0}] at a position of 1.0 µm in a direction perpendicular to the interface and inward into ferrite grains corresponds to the average Mn concentration in the ferrite grains, and on the other hand, the maximum value [Mn_{0.5}] of the Mn concentration in a region up to 0.5 µm therefrom represents the Mn concentration in a region in the vicinity of the interface at which voids are likely to be formed. Therefore, the difference ΔMn between them is an index indicating the degree of concentration of Mn at the interface between ferrite and martensite. If ΔMn is more than 1.00 mass%, since the formation of voids at the interface is significantly promoted, and breaking resistance greatly deteriorates, ΔMn is set to be 1.00 mass% or less, and is preferably 0.50 mass% or less. The lower limit value of ΔMn is not particularly set, and may be 0 mass% or 0.01 mass% or more.

Such a distribution state of the Mn concentration in the vicinity of the interface between ferrite and martensite is formed during continuous annealing. During heating in continuous annealing, Mn is concentrated at the previous austenite grain boundaries or at the ferrite/austenite interface. In the cooling process, ferrite is generated from austenite, and in this case, if a certain area proportion of ferrite is generated in the entire steel plate, the interface shifting amount of one crystal grain becomes smaller as the average crystal grain size during heating becomes finer. That is, when the average crystal grain size before continuous annealing is made finer in advance, the interface shifting amount per one crystal grain in the cooling process can be kept small, and thus the distance between the concentrated region at the interface before the start of cooling and the interface after ferrite is generated becomes closer. Generally, since diffusion is faster at the grain boundaries than the grain interior, if the region in which Mn is concentrated is closer to the grain boundaries, it becomes easier for Mn to diffuse due to grain boundary diffusion. The inventors found that, when the interface shifting amount during cooling in continuous annealing is controlled in this manner, the Mn-concentrated part in the cooling process is diffused, and the Mn concentration at the interface between ferrite and martensite, that is, the above ΔMn, can be reduced.

### (the average aspect ratio of crystal grains of the ferrite and the bainite having an area of 3 µm² or less is 1.0 or more and 2.0 or less)

The average aspect ratio of crystal grains of the ferrite and the bainite having an area of 3 µm² or less is an index indicating breaking resistance. Generally, the smaller the aspect ratio and the more equiaxed grains, the less stress concentration occurs at the interface. In order to exhibit sufficient breaking resistance, the average aspect ratio of crystal grains of the ferrite and the bainite is preferably 1.0 or more and 2.0 or less. If the average aspect ratio is 2.0 or less, this effect is easily obtained, and the average aspect ratio is more preferably 1.0 or more and 1.5 or less.

Here, in the present embodiment, the aspect ratio refers to the ratio between the longest diameter (major diameter) of ferrite crystal grains and the longest diameter (minor diameter) of the ferrite diameters perpendicular thereto. The same applies to the aspect ratio of bainite crystal grains.

In addition, the average aspect ratio of crystal grains of the ferrite and the bainite having an area of 30 µm² or more is not particularly limited, and in order to reduce stress concentration on the interface, elongated grains are preferable, and thus the average aspect ratio may be more than 2.0 and 5.0 or less.

(the average carbon concentration at a depth position of 10 µm in the plate thickness direction from the surface of the steel plate is 0.800 times or less the average carbon concentration at a position at a depth of 1/4 in the plate thickness direction from the surface of the steel plate)

In the present embodiment, a decarburized layer may be formed on the surface layer of the steel plate. The decarburized layer formed on the surface layer of the steel plate provides an index indicating bendability. Within the decarburized layer, when the average carbon concentration at a depth position of 10 µm in the plate thickness direction is set to 0.800 times or less the average carbon concentration in the interior of the steel plate unaffected by decarburization, that is, at a position at a depth of 1/4 in the plate thickness direction from the surface of the steel plate, it is possible to improve the bendability of the steel plate. When the average carbon concentration at a depth position of 10 µm from the surface of the steel plate is 0.800 times or less the average carbon concentration at a position at a depth of 114, this means that decarburization has occurred sufficiently. Due to sufficient decarburization, a bending property improving effect can be sufficiently exhibited. Therefore, the average carbon concentration at a depth position of 10 µm from the surface of the steel plate is 0.800 times or less, preferably 0.600 times or less, and more preferably 0.400 times or less the average carbon concentration at a position at a depth of 1/4. The lower limit value is not particularly limited, and the average carbon concentration at a depth position of 10 µm from the surface of the steel plate is preferably 0.001 times or more and more preferably 0.005 times or more the average carbon concentration at a position at a depth of 1/4.

Here, when the steel plate has a coating layer (for example, a plating layer) on the surface, the "surface" of a "depth position of 10 µm in the plate thickness direction from the surface of the steel plate" is the surface of ferrite. In addition, the reason why the average carbon concentration at a depth position of 10 µm in the plate thickness direction from the surface of the steel plate is used as a reference is that the carbon concentration at the depth position greatly contributes to bendability.

The average carbon concentration at each position can be measured through glow discharge optical emission spectrometry (GDS).

The concentration profile of each element is measured through GDS in the depth direction (plate thickness direction) from the surface of the steel plate, and the average carbon concentration at a position of 10 µm from the surface of the steel plate is obtained. The average carbon concentration at a position at a depth of 1/4 is obtained by measuring the ground surface through GDS after grinding a 1/4 part of the plate thickness.

Next, identification of ferrite, bainite, martensite, tempered martensite, pearlite and retained austenite, and calculation of areas and area proportions thereof will be described.

The identification, area and area proportion of each metal structure can be calculated by observing a 100 µm×100 µm region in the cross section of the steel plate parallel to the rolling direction and perpendicular to the plate surface at a magnification of 1,000 to 50,000 using electron back scattering diffraction (EBSD), X-ray measurement, corrosion using a nital reagent or LePera's solution, and a scanning electron microscope. Here, when the area proportion of any structure is measured, three measurement points are observed, and the average value thereof is calculated.

The area and area proportion of ferrite can be measured by the following method. That is, using EBSD associated with the scanning electron microscope, a range of 1/8 to 3/8 of the thickness centering on the position of 1/4 of the plate thickness from the surface of the steel plate is measured at intervals (a pitch) of 0.2 µm. The value of the local misorientation average (Grain Average Misorientation: GAM) is calculated from measurement data. Then, a region having a local misorientation average value of less than 0.5° is defined as ferrite, and its area and area proportion are measured. Here, the local misorientation average is a value obtained by calculating the misorientation between adjacent measurement points in a region surrounded by grain boundaries with a crystal misorientation of 5° or more, and averaging it for all measurement points within the crystal grains.

A sample with a cross section of the plate thickness parallel to the rolling direction of the steel plate as an observation surface is collected, the observation surface is polished and etched with a nital solution, a range of 1/8 to 3/8 of the thickness centering on 1/4 of the plate thickness is observed using a field emission scanning electron microscope (FE-SEM), and known image analysis software is used to calculate the area and area proportion of bainite. Here, the area proportion can be calculated using image analysis software, for example, "ImageJ." Here "ImageJ" is an open source and public domain image processing software, which is widely used by those skilled in the art.

Here, in observation with FE-SEM, for example, the structure on a square observation surface with a side of 30 µm is distinguished as follows. Bainite is an aggregate of lath-shaped crystal grains that do not contain iron carbides having a major diameter of 20 nm or more therein, or that do not contain iron carbides having a major diameter of 20 nm or more therein, and the carbides belong to a single variant, that is, a group of iron carbides that extend in the same direction. Here, the group of iron carbides extending in the same direction means that the difference in the extension direction of the group of iron carbides is 5° or less. Regarding bainite, a bainite surrounded by grain boundaries with a misorientation of 15° or more is counted as one bainite grain.

Etching with a LePera's solution is performed and a range of 1/8 to 3/8 of the thickness centering on 1/4 of the plate thickness is observed and imaged under an FE-SEM, and the area proportion of martensite and tempered martensite can be calculated by subtracting the area proportion (details will be described below) of retained austenite measured using X rays from the area proportion of the non-corroded region.

The area proportion of retained austenite can be calculated by measuring the diffraction intensity using X rays in a sample in which a region of 100 µm is removed from the surface layer in the plate thickness direction according to electropolishing or chemical polishing. Specifically, MoKα rays as characteristic X-rays are used for measurement, and the area proportion of retained austenite can be calculated from the integrated intensity ratio of diffraction peaks of the obtained bcc phase (200) and (211) and fcc phase (200), (220), and (311).

A sample with a cross section of the plate thickness parallel to the rolling direction of the steel plate as an observation surface is collected, the observation surface is polished and corroded with a nital reagent, a range of 1/8 to 3/8 of the thickness centering on a position of 1/4 of the plate thickness from the surface of the steel plate is observed and imaged using a secondary electron image under a scanning electron microscope, and thus the area proportion of pearlite can be obtained. In the secondary electron image, carbides are observed with a relatively brighter contrast than other steel structures. In the captured image, a region in which plate-like carbides are arranged in a row at intervals of 0.5 µm or less is defined as pearlite, and the area proportion of pearlite is calculated using the above image analysis software "ImageJ."

The grain size of crystal grains of the ferrite and the bainite and the ratio of the numbers thereof, that is, the number of crystal grains of the ferrite and the bainite having an area of 3 µm² or less, the number of crystal grains of the ferrite and the bainite having an area of 30 µm² or more, and the ratio of the number thereof to the total number of crystal grains of the ferrite and the bainite are calculated through image analysis using the above "ImageJ." Specifically, a 100 µm×100 µm region in a cross section of the steel plate parallel to the rolling direction and perpendicular to the plate surface is observed and imaged at a magnification of 1,000 to 50,000 under a scanning electron microscope, and "ImageJ" is used for calculation. Here, the number of crystal grains of the ferrite and the bainite having an area of 3 µm² or less does not include the number of crystal grains having an area of less than 0.1 µm² (that is, crystal grains having an area of less than 0.1 µm² are excluded as noise).

The difference ΔMn between an Mn concentration at a position of 1.0 µm from an interface between ferrite and martensite in a direction perpendicular to the interface and inward into ferrite grains and a maximum Mn concentration in a region up to 0.5 µm therefrom is calculated using an electron probe micro analyzer (EPMA). As shown in Fig. 1, line analysis is performed using the EPMA in the perpendicular direction with respect to the tangent at the interface between ferrite and martensite and inward into ferrite grains. The step interval is 0.01 µm. The difference between the Mn concentration at a distance position of 1.0 µm from the interface and the maximum value of the Mn concentration up to a position of 0.5 µm from the interface is obtained as ΔMn. Five arbitrary interfaces between ferrite and martensite present in the vicinity of a 1/4 part of the plate thickness (arbitrary positions in a range of a 1/8 depth position to a 3/8 depth position in the plate thickness) are selected, each ΔMn is calculated, and the average value thereof is evaluated. Here, the part in which the interface is a straight line or a part in which the interface is curved and the tangent is drawn is a measurement target.

Here, the "interface between ferrite and martensite" in the present embodiment is defined as follows.

First, a sample with a cross section of the plate thickness parallel to the rolling direction of the steel plate as an observation surface is collected, and within the observation surface in a range of 1/8 to 3/8 of the thickness centering on a position of 1/4 of the plate thickness from the surface of the steel plate, in a 100 µm×100 µm region, the C concentration is analyzed using the EPMA. Then, based on mapping of the obtained C concentration, when a structure having a C concentration of less than 0.1 mass% is classified as ferrite, a structure having a C concentration of 0.1 to 0.8 mass% is classified as martensite, a structure having a C concentration of more than 0.8 mass% is classified as retained austenite, and the structure distribution is identified, the "interface between ferrite and martensite" is defined.

The average aspect ratio of crystal grains of the ferrite and the bainite is calculated through image analysis using the above "ImageJ."

Next, the reasons for limiting the component composition of the steel plate according to the present embodiment will be described. Hereinafter, % in the component composition means mass%.

### (C: 0.07% or more and 0.15% or less)

C is an element that secures a predetermined amount of martensite and improves the strength of the steel plate. If the C amount is less than 0.07%, it is difficult to obtain a predetermined amount of martensite, high tensile strength (for example, 900 MPa or more) cannot be secured, and thus the C amount is 0.07% or more. The C amount is preferably 0.09% or more. On the other hand, if the C amount exceeds 0.15%, the production of ferrite is reduced, elongation is reduced, ductility of the punched end surface deteriorates, and thus the C amount is 0.15% or less. In order to reduce deterioration of bendability, a smaller C content is preferable. The C amount is preferably 0.13% or less.

### (Si: 0.01% or more and 2.0% or less)

Si has a function of increasing strength as a solid solution strengthening element and is also effective in obtaining a structure containing martensite and bainite, and additionally, residual γ and the like. The content thereof is adjusted according to a desired strength level. If the content is more than 2.0%, press formability is poor, chemical processing deteriorates, and ductility of the punched end surface deteriorates. In addition, in order to reduce deterioration of bendability, a smaller Si amount is preferable. Therefore, the upper limit is 2.0% or less. When molten zinc plating is applied, it is preferable to set the Si amount to 1.2% or less in consideration of problems such as deterioration of plating adhesion and a decrease in productivity due to the delay of alloying reactions. If the Si amount is less than 0.01%, since the production cost is high, 0.01% is the substantial lower limit.

### (Mn: 1.5% or more and 3.0% or less)

Mn is an element that contributes to improving strength, and is an element that has a function of reducing ferrite transformation generated during a heat treatment in a continuous annealing device or continuous molten zinc plating device. If the Mn amount is less than 1.5%, the effect is not sufficiently exhibited, and it is difficult to obtain a sufficient amount of martensite and thus high tensile strength (for example, a tensile strength of 900 MPa or more) cannot be obtained. In addition, in order to reduce deterioration of bendability, it is not preferable to excessively reduce the Mn amount. Therefore, the Mn amount is 1.5% or more. The Mn amount is preferably 1.7% or more. The Mn amount is more preferably 1.9% or more. On the other hand, if the Mn amount is more than 3.0%, ferrite transformation is excessively reduced, a predetermined amount of ferrite cannot be secured, elongation is reduced, and ductility of the punched end surface deteriorates. Therefore, the Mn amount is 3.0% or less. The Mn amount is preferably 2.7% or less.

### (P: 0% or more and 0.020% or less)

P is an impurity element and is an element that segregates in the center of the steel plate in the plate thickness and inhibits toughness. In addition, P is an element that becomes brittle a welding part when the steel plate is welded. If the P amount is more than 0.020%, the welding part strength, hole expandability and ductility of the punched end surface significantly deteriorate. Therefore, the P amount is 0.020% or less. The P amount is preferably 0.010% or less. A smaller P amount is preferable, and the lower limit is not particularly limited. The P content may be 0%. On the other hand, if the P amount is reduced to less than 0.0001% in a practical steel plate, production cost significantly increases, which is economically disadvantageous. Therefore, the lower limit value of the P content may be 0.0001%.

### (S: 0% or more and 0.0200% or less)

S is an impurity element and is an element that inhibits weldability and inhibits productivity during casting and during hot rolling. In addition, S is an element that forms coarse MnS and inhibits hole expandability. If the S amount is more than 0.0200%, weldability, productivity, hole expandability and ductility of the punched end surface significantly deteriorate. Therefore, the S amount is 0.0200% or less. The S amount is preferably 0.005% or less. A smaller S amount is preferable, and the lower limit is not particularly limited. The S content may be 0%. On the other hand, if the S amount is reduced to less than 0.0001% in a practical steel plate, production cost significantly increases, which is economically disadvantageous. Therefore, the lower limit value of the S content may be 0.0001%.

### (Al: 0.001% or more and 1.000% or less)

Al is an element that acts as a steel deoxidizing agent and stabilizes ferrite, and is contained as necessary. When Al is contained, if the Al content is less than 0.001%, since the containing effect is not sufficiently obtained, the lower limit is 0.001% or more. On the other hand, if the Al content is more than 1.000%, coarse Al oxides are generated, and ductility of the punched end surface deteriorates. Therefore, the upper limit is 1.000% or less and the Al content is preferably 0.001% or more and 0.50% or less.

### (N: 0% or more and 0.020% or less)

N is an element that forms coarse nitrides, inhibits bendability and hole expandability, and causes the occurrence of blowholes during welding. If the N amount is more than 0.020%, coarse nitrides are formed, formability and ductility of the punched end surface deteriorate, and the occurrence of blowholes becomes significant. In addition, in order to reduce deterioration of bendability, a smaller N amount is preferable. Therefore, the N amount is 0.020% or less. A smaller N amount is preferable, and the lower limit is not particularly limited. The N content may be 0%. On the other hand, if the N amount is reduced to less than 0.0005% in a practical steel plate, production cost significantly increases, which is economically disadvantageous. Therefore, the lower limit value of the N content may be 0.0005%.

### (Co: 0 to 0.500%)

Co is an element that is effective to improve strength of the steel plate. The Co content may be 0%, and in order to obtain this effect, the Co content is preferably 0.001% or more and more preferably 0.010% or more. On the other hand, if the Co content is too large, there is a risk of ductility of the steel plate deteriorating and formability deteriorating. Therefore, the Co content is preferably 0.500% or less.

### (Ni: 0 to 1.000%)

Like Co, Ni is an element that is effective to improve strength of the steel plate. The Ni content may be 0%, and in order to obtain this effect, the Ni content is preferably 0.001% or more and more preferably 0.010% or more. On the other hand, if the Ni content is too large, there is a risk of ductility of the steel plate deteriorating and formability deteriorating. Therefore, the Ni content is preferably 1.000% or less.

### (Mo: 0 to 1.000%)

Like Mn, Mo is an element that contributes to improving strength of the steel plate. This effect can be obtained even with a small amount. The Mo content may be 0%, and in order to obtain this effect, the Mo content is preferably 0.010% or more. On the other hand, if the Mo content is more than 1.000%, coarse Mo carbides are formed, and there is a risk of cold formability of the steel plate deteriorating. Therefore, the Mo content is preferably 1.000% or less.

### (Cr: 0 to 2.000%)

Like Mn and Mo, Cr is an element that contributes to improving strength of the steel plate. This effect can be obtained even with a small amount. The Cr content may be 0%, and in order to obtain this effect, the Cr content is preferably 0.001% or more and more preferably 0.100% or more. On the other hand, if the Cr content is more than 2.000%, coarse Cr nitrides are formed, and there is a risk of cold formability of the steel plate deteriorating. Therefore, the Cr content is preferably 2.000% or less.

### (O: 0% or more and 0.0200% or less)

O is an element that forms coarse oxides, deteriorates formability and breaking resistance, and causes the occurrence of blowholes during welding. If the O amount is more than 0.0200%, due to the presence of coarse oxides, formability and ductility of the punched end surface deteriorate, and the occurrence of blowholes becomes significant. In addition, in order to reduce deterioration of bendability, a smaller O amount is preferable. Therefore, the O content may be 0.0200% or less. A smaller O amount is preferable, and the lower limit is not particularly limited. The O content may be 0%. On the other hand, if the O amount is reduced to less than 0.0001% in a practical steel plate, production cost significantly increases, which is economically disadvantageous. Therefore, the lower limit value of the O content may be 0.0001 %.

### (Ti: 0 to 0.50%)

Ti is an element that is important for controlling the morphology of carbides. Ti can promote an increase in strength of ferrite. In addition, Ti is an element that forms coarse Ti oxides or TiN and has a risk of formability of the steel plate deteriorating. Therefore, in order to secure formability of the steel plate, a smaller Ti content is preferable, and the Ti content is preferably 0.50% or less and may be 0%. However, if the Ti content is reduced to less than 0.001%, since an excessive increase in refining cost is caused, the lower limit of the Ti content may be 0.001 %.

### (B: 0 to 0.0100%)

B is an element that reduces formation of ferrite and pearlite from austenite in the cooling process, and promotes formation of a low temperature transformation structure such as bainite or martensite. In addition, B is an element that is beneficial for increasing strength of the steel plate. This effect can be obtained even with a small amount. The B content may be 0%, and in order to obtain this effect, the B content is preferably 0.0001% or more. However, if the B content is too large, coarse B oxides are generated, the B oxides become starting points for the formation of voids during press molding and there is a risk of formability of the steel plate deteriorating. Therefore, the B content is preferably 0.0100% or less. Here, for identification of less than 0.0001% of B, it is necessary to pay close attention to the analysis. If the B content is below the detection lower limit of the analysis device, the B content may be considered 0%.

### (Nb: 0 to 0.50%)

Like Ti, Nb is an element that is effective to control the morphology of carbides, and is an element that is effective to refine the structure and improve toughness of the steel plate. This effect can be obtained even with a small amount. The Nb content may be 0%, and in order to obtain this effect, the Nb content is preferably 0.0001 % or more and more preferably 0.001% or more. However, if the Nb content is too large, a large number of fine and hard Nb carbides are precipitated, strength of the steel plate increases, ductility significantly deteriorates, and there is a risk of formability of the steel plate deteriorating. Therefore, the Nb content is preferably 0.50% or less.

### (V: 0 to 0.500%)

Like Ti and Nb, V is an element that is effective to control the morphology of carbides, and is an element that is effective to refine the structure and improve toughness of the steel plate. The V content may be 0%, and in order to obtain this effect, the V content is preferably 0.001% or more. However, if the V content is too large, a large number of fine V carbides are precipitated, strength of the steel material increases, ductility deteriorates, and there is a risk of formability of the steel plate deteriorating. Therefore, the V content is preferably 0.500% or less.

### (Cu: 0 to 0.5%)

Cu is an element that contributes to improving strength of the steel plate. This effect can be obtained even with a small amount. The Cu content may be 0%, and in order to obtain this effect, the Cu content is preferably 0.001% or more. However, if the Cu content is too large, there is a risk of red brittleness occurring and productivity during hot rolling decreasing. Therefore, the Cu content is preferably 0.5% or less.

### (W: 0 to 0.100%)

Like Nb and V, W is an element that is effective in controlling the morphology of carbides and improving strength of the steel plate. The W content may be 0%, and in order to obtain this effect, the W content is preferably 0.001% or more. On the other hand, if the W content is too large, a large number of fine W carbides are precipitated, strength of the steel plate increases, ductility deteriorates, and there is a risk of cold processability of the steel plate deteriorating. Therefore, the W content is preferably 0.100% or less.

### (Ta: 0 to 0.100%)

Like Nb, V, and W, Ta is an element that is effective to control the morphology of carbides and improve strength of the steel plate. The Ta content may be 0%, and in order to obtain this effect, the Ta content is preferably 0.001% or more. On the other hand, if the Ta content is too large, a large number of fine Ta carbides are precipitated, strength of the steel plate increases, ductility deteriorates, and there is a risk of cold processability of the steel plate deteriorating. Therefore, the Ta content is preferably 0.100% or less, more preferably 0.020% or less, and still more preferably 0.010% or less.

### (Sn: 0 to 0.050%)

Sn is an element that can be contained in the steel plate when scrap is used as a raw material for the steel plate. In addition, Sn has a risk of cold formability of the steel plate deteriorating due to embrittlement of ferrite. Therefore, a smaller Sn content is preferable. The Sn content is preferably 0.050% or less, more preferably 0.040%, and may be 0%. However, if the Sn content is reduced to less than 0.001%, an excessive increase in refining cost is caused, and thus the Sn content may be 0.001% or more.

### (Sb: 0 to 0.050%)

Like Sn, Sb is an element that can be contained in the steel plate when scrap is used as a raw material for the steel plate. Sb strongly segregates at grain boundaries, makes grain boundaries brittle, deteriorates ductility, and poses a risk of causing cold formability to deteriorate. Therefore, a smaller Sb content is preferable. The Sb content is preferably 0.050% or less, more preferably 0.040%, and may be 0%. However, if the Sb content is reduced to less than 0.001 %, since an excessive increase in refining cost is caused, the Sb content may be 0.001% or more.

### (As: 0 to 0.050%)

Like Sn and Sb, As is an element that can be contained in the steel plate when scrap is used as a raw material for the steel plate. As is an element that strongly segregates at grain boundaries, and poses a risk of causing cold formability to deteriorate. Therefore, a smaller As content is preferable. The As content is preferably 0.050% or less, more preferably 0.040% or less, and may be 0%. However, if the As content is reduced to less than 0.001 %, an excessive increase in refining cost is caused, and the As content may be 0.001% or more.

### (Mg: 0 to 0.050%)

Mg is an element that controls the morphology of sulfides and oxides and contributes to improving bending formability of the steel plate. This effect can be obtained even with a small amount. The Mg content may be 0%, and in order to obtain this effect, the Mg content is preferably 0.0001% or more. However, if the Mg content is too large, there is a risk of cold formability deteriorating due to formation of coarse inclusions. Therefore, the Mg content is preferably 0.050% or less and more preferably 0.040% or less.

### (Ca: 0 to 0.050%)

Like Mg, Ca is an element that can control the morphology of sulfides with a small amount. The Ca content may be 0%, and in order to obtain this effect, the Ca content is preferably 0.001 % or more. However, if the Ca content is too large, coarse Ca oxides are generated, and the Ca oxides can become starting points for the occurrence of cracks during cold forming. Therefore, the Ca content is preferably 0.050% or less and more preferably 0.030% or less.

### (Zr: 0 to 0.050%)

Like Mg and Ca, Zr is an element that can control the morphology of sulfides with a small amount. The Zr content may be 0%, and in order to obtain this effect, the Zr content is preferably 0.001% or more. However, if the Zr content is too large, coarse Zr oxides are generated, and there is a risk of cold formability deteriorating. Therefore, the Zr content is preferably 0.050% or less and more preferably 0.040% or less.

### (REM: 0 to 0.100%)

REMs are rare earth elements. REMs are elements that are effective to control the morphology of sulfides even with a small amount. The REM content may be 0%, and in order to obtain this effect, the REM content is preferably 0.001% or more. However, if the REM content is too large, coarse REM oxides are generated, and there is a risk of processability and breaking resistance deteriorating. Therefore, the REM content is preferably 0.100% or less and more preferably 0.050% or less. Here, REM is a general term for 2 elements: scandium (Sc) and yttrium (Y), and for 15 elements (lanthanides) from lanthanum (La) to lutetium (Lu). In addition, "REM" in the present embodiment is composed of one or more selected from among these rare earth elements, and "REM content" is the total amount of rare earth elements.

In the component composition of the steel plate according to the present embodiment, the remainder excluding the above elements is composed of Fe and impurities. Impurities are elements that are mixed in from steel raw materials and/or during the steelmaking process and allowed to remain as long as properties of the steel plate according to the present embodiment are not inhibited, and are elements that are not components intentionally added to the steel plate.

The plate thickness of the steel plate according to the present embodiment is not limited to a specific range, and is preferably 0.3 to 6.0 mm in consideration of strength, versatility, and productivity.

Next, a method for producing a steel plate according to the present embodiment will be described. The method for producing a steel plate of the present embodiment includes processes: steelmaking process-hot rolling process-coiling process-holding process-cooling process-cold rolling process-annealing process (continuous annealing process). In addition, a pickling process may be provided between the cooling process and the cold rolling process. As long as the effects of the present invention are not impaired, production conditions in respective processes may be appropriately determined, and in order to control the crystal grain size, the average aspect ratio and the Mn concentration at the interface, particularly, it is important to appropriately control respective conditions in the hot rolling process and the continuous annealing process.

Hereinafter, respective processes and conditions in the production method will be described in detail.

First, for a cast slab having the component composition of the steel plate according to the present embodiment described above (hereinafter simply referred to as a slab),
(a-1) the slab temperature in a final finishing stand for hot rolling is set to 900°C or lower,
(a-2) hot rolling is performed at a plate thickness reduction rate of 30% or more in the final finishing stand for hot rolling (hot rolling process),
(a-3) the hot-rolled steel plate after hot rolling is coiled in a temperature range of 450°C or higher and 650°C or lower (coiling temperature) (coiling process),
(a-4) the hot-rolled steel plate after the coiling process is held in a temperature range from the coiling temperature to (coiling temperature-50)°C for a holding time (retention time) of 8 hours or shorter (holding process),
(a-5) after the holding process, the hot-rolled steel plate is cooled to 300°C at the average cooling rate of 0.10 °C/sec or faster (cooling process),
(a-6) the hot-rolled steel plate after the cooling process is pickled to form an intermediate steel plate (pickling process),
(b) the intermediate steel plate after the pickling is subjected to cold rolling at a plate thickness reduction rate of 20% or more and 80% or less to form a cold-rolled steel plate (cold rolling process),
(c-1) the cold-rolled steel plate is, under an atmosphere with a dew point of -80°C or higher and 20°C or lower,
(c-2) heated to 740°C or higher and 900°C or lower,
(c-3) and held (retained) for 60 seconds or longer for an annealing process. Here,
(d) in the annealing process described in (c-1) to (c-3), a coating layer forming process in which a coating layer containing zinc, aluminum, magnesium or an alloy thereof is formed on both surfaces of the steel plate may be performed.

Here, the pickling process (a-6) is an optional process, and if the pickling process is not performed, the steel plate that has undergone the cooling process (a-5) is used as an intermediate steel plate.

In order to improve breaking resistance, the steel plate according to the present embodiment is cold-rolled and then annealed to make the metal structure fine and equiaxed grains, and the Mn concentration at the interface between ferrite and martensite is controlled. In order to control such a metal structure, it is effective to control the hot-rolled structure before cold rolling to be uniform and fine, and for that purpose, it is important to control the temperature and the plate thickness reduction rate in the final finishing stand for hot rolling (hereinafter also simply referred to as a final stand). That is, it is important to make the structure uniform and fine in advance according to hot rolling, and accordingly, the Mn concentration at the interface can be controlled. Thus, as a result, it is possible to produce a steel plate that simultaneously satisfies having high levels of strength, formability and breaking resistance.

In addition, the coiling temperature after rolling in the final stand and the cooling rate after the coiling process are also important. Generally, in the process of cooling to about room temperature from the start of coiling, carbides are generated. The carbides generated here are dissolved during a heating procedure in the annealing process, and become austenite nucleation sites. Therefore, in order to make the metal structure after annealing fine and equiaxed grains, it is necessary to uniformly disperse the carbides when the annealing process starts and to dissolve them during the heating procedure. The concentrations of alloy elements such as Mn and Cr in the carbides are important and have a great effect on the dissolution of the carbides. It is generally known that these alloy elements are concentrated in carbides, and the more concentrated the alloy elements, the more difficult it is for the carbides to dissolve in the subsequent annealing process. For example, if the Mn concentration in the carbide is more than 3 mass%, dissolution becomes significantly difficult. Since the concentration of alloy elements in such carbides depends on the thermal history to around room temperature from the start of coiling, it is necessary to appropriately control this temperature history.

### [Hot rolling process]

### (a-1) temperature of slab in hot rolling final stand: 900°C or lower

As described above, in order to refine grain sizes of the ferrite and the bainite after the annealing process, it is necessary to refine the metal structure after hot rolling (hot-rolled structure). In the hot rolling process in the present embodiment, the slab is continuously passed through a plurality of rolling stands and rolled. If the temperature of the slab in the hot rolling final stand is set to 900°C or lower, it is possible to disperse a large amount of recrystallized grain nucleation sites during hot rolling and refine the hot-rolled structure. Thereby, it is possible to control the grain size of the structure after annealing. If the temperature of the slab in the hot rolling final stand is higher than 900°C, the hot-rolled structure becomes coarse and mixed grains, and the structure after the annealing process also becomes coarse, and as a result, the breaking resistance deteriorates. The temperature of the slab in the hot rolling final stand is preferably lower than 900°C, more preferably 890°C or lower, and still more preferably 880°C or lower. The lower limit value of the temperature of the slab in the final stand is not particularly specified, but if it is too low, the productivity decreases due to an increase in the rolling load, and there is a risk of the steel plate during rolling breaking. Therefore, 600°C or higher may be set.

### (a-2) plate thickness reduction rate in hot rolling final stand: 30% or more

The plate thickness reduction rate in the hot rolling final stand, as well as the temperature of the slab in the final stand, contributes to refining the grain size of the ferrite and the bainite after the annealing process. If the plate thickness reduction rate is 30% or more, it is possible to uniformly disperse a large amount of recrystallized grain nucleation sites during hot rolling and refine the hot-rolled structure. Thereby, it is possible to control the grain size of the structure after annealing. If the plate thickness reduction rate in the final stand is less than 30%, this effect cannot be sufficiently obtained. The plate thickness reduction rate in the hot rolling final stand is preferably 40% or more. The upper limit value of the plate thickness reduction rate in the final stand is not particularly specified, and even if it exceeds 60%, a hot-rolled structure refining effect is maximized, and a device load increases excessively due to an increase in rolling load. Therefore, the plate thickness reduction rate in the final stand is preferably 60% or less.

### Finish rolling start temperature: 1,100°C or lower

In the hot rolling process of the present embodiment, as described above, the hot-rolled structure is refined utilizing recrystallization. From this point of view, the hot rolling process includes a rough rolling process and a finish rolling process including rolling in a final finishing stand, and the rolling start temperature in the finish rolling process is preferably 1,100°C or lower.

In the hot rolling process, finish rolling is generally performed after rough rolling. In the finish rolling of the present embodiment, the finish rolling start temperature is preferably 1,100°C or lower. It is generally known that, if the plate thickness reduction rate during finish rolling (particularly, the plate thickness reduction rate in the final stand) excessively increases, since the metal structure extends in the rolling direction, it is difficult to obtain a fine and equiaxed hot-rolled structure. However, when finish rolling is performed after the finish rolling start temperature is set to be relatively low, since strain accumulation is promoted during rolling, it is possible to stably obtain a fine structure as the final structure. That is, when the finish rolling start temperature is designed to be low, even if large reduction rolling with a relatively large plate thickness reduction rate is performed in the finish rolling final stand, it is possible to further reduce extension of the structure in the rolling direction and it is possible to stably obtain a fine and equiaxed structure. From this point of view, the finish rolling start temperature is preferably 1,100°C or lower, more preferably 1,060°C or lower, and still more preferably 1,030°C or lower. The lower limit value of the finish rolling start temperature is not particularly specified, but if it is excessively lowered, since there is a risk of the steel plate cracking, 950°C or higher may be set.

### [Coiling process]

### (a-3) coiling temperature: 450°C or higher and 650°C or lower

The steel plate after hot rolling (hot-rolled steel plate) is coiled in a temperature range of 450°C or higher and 650°C or lower.

If the coiling temperature is higher than 650°C, pearlite transformation proceeds and pearlite containing coarse carbides is unevenly generated, and thus the carbides are unlikely to dissolve in the annealing process as described above. Since undissolved remaining carbides do not function well as austenite nucleation sites, the structure after annealing becomes coarse and mixed grains, and as a result, the breaking resistance deteriorates. In addition, if the coiling temperature is higher than 650°C, for the same reason, there is a risk of the average aspect ratio of the annealed structure increasing. On the other hand, if the coiling temperature is lower than 450°C, the strength of the hot-rolled plate becomes excessive and the cold rolling load increases and thus the productivity deteriorates. The coiling temperature is preferably 480°C or higher and 600°C or lower.

### [Holding process]

### (a-4) holding time in temperature range from coiling temperature to (coiling temperature-50)°C: 8 hours or shorter

The holding time (retention time) in the temperature range from the coiling temperature to (coiling temperature-50)°C affects the concentration of elements such as Mn in the carbide. If the holding time in the temperature range is too long, since the concentration of elements such as Mn in the carbide is promoted, the grain size of the structure after annealing becomes coarse and mixed grains are formed and the breaking resistance deteriorates as described above. In addition, if the holding time is longer than 8 hours, since elements such as Mn are concentrated in the carbide and there is a risk of the average aspect ratio of the structure after annealing increasing, the holding time is 8 hours or shorter. The holding time is preferably 6 hours or shorter. On the other hand, in order to secure the time for transformation to a relatively soft structure such as pearlite in the structure of the hot-rolled steel plate, and improve cold rolling properties, the holding time is preferably 30 minutes or longer.

Here, the holding time starts when coiling is completed. As the holding method, heat insulation methods such as a method of coiling an insulation material around a coiled coil and a method of covering with a heat insulation case may be exemplified.

It is preferable to perform the heat insulation method (for example, a method of coiling an insulation material around a coil and a method of covering with a heat insulation case) immediately after the above coiling process is performed. After the coiling process, if the hot-rolled coil is left coiled for a long time, the temperature at the ends of the hot-rolled coil in the width direction is excessively lowered, and there is a risk of the temperature distribution in the hot-rolled coil becoming non-uniform. Therefore, it is preferable to perform the above heat insulation method for 20 minutes or shorter, more preferably 15 minutes or shorter, and still more preferably 10 minutes or shorter, after the coiling process.

### [Cooling process]

### (a-5) after the holding process, the average rate of cooling to 300°C: 0.10 °C/sec or faster

After the holding process, the average rate of cooling to 300°C affects the concentration of elements such as Mn and Cr in the carbide. After the holding process, if the average cooling rate in the temperature range up to 300°C is too slow, since the concentration of elements such as Mn in the carbide is promoted, the grain size of the structure after annealing becomes coarse and mixed grains are formed, and the breaking resistance deteriorates as described above. In addition, if the average cooling rate is slower than 0.10 °C/sec, since elements such as Mn are concentrated in the carbide and there is a risk of the average aspect ratio of the structure after annealing increasing, the average cooling rate is 0.10 °C/sec or faster. The average cooling rate is preferably 0.50 °C/sec or faster. On the other hand, if rapid cooling is performed, since the flatness of the steel plate is impaired due to the influence of a temperature difference occurring in the steel plate in the plate thickness direction, the average cooling rate is preferably 50 °C/sec or slower.

Here, the average cooling rate is a value obtained by dividing the temperature drop range of the steel plate to 300°C from when the holding process is completed by the required time for cooling to 300°C from when the holding process is completed.

### [Pickling process]

### (a-6) the hot-rolled steel plate after the cooling process is pickled to form an intermediate steel plate.

The hot-rolled steel plate after the above cooling process is pickled to form an intermediate steel plate. There are no particular limitations on conditions of the pickling process. For example, pickling may be performed once or may be performed a plurality of times in a divided manner as necessary. Here, as described above, the pickling process in the present embodiment is an optional process, and when the pickling process is not performed, the steel plate that has undergone the cooling process (a-5) is used as an intermediate steel plate.

### [Cold rolling process]

(b) the intermediate steel plate is subjected to cold rolling at a plate thickness reduction rate of 20% or more and 80% or less to form a cold-rolled steel plate (hereinafter referred to as a steel plate).

Cold rolling is performed at a plate thickness reduction rate of 20% or more and 80% or less. If the plate thickness reduction rate is less than 20%, strain accumulation in the steel plate becomes insufficient, and austenite nucleation sites during annealing become non-uniform. Thereby, the grain size after annealing becomes coarse or mixed grains are formed. In addition, if austenite nucleation sites become non-uniform, there is a risk of the aspect ratio increasing. Thereby, the breaking resistance deteriorates. If the plate thickness reduction rate is more than 80%, the cold rolling load becomes excessive, and the productivity deteriorates. Therefore, the plate thickness reduction rate is 20% or more and 80% or less, and preferably 30% or more and 80% or less. There is no particular limitation on cold rolling methods, and the number of rolling passes and the reduction rate for each pass may be appropriately set.

The steel plate obtained by cold rolling is subjected to continuous annealing.

As described above, the distribution state of the Mn concentration in the vicinity of the interface between ferrite and martensite, that is, ΔMn, is controlled during the continuous annealing. During heating in continuous annealing, Mn is concentrated at the previous austenite grain boundaries or at the ferrite/austenite interface. In the cooling process, ferrite is generated from austenite, and in this case, if a certain area proportion of ferrite is generated in the entire steel plate, the interface shifting amount of one crystal grain becomes smaller as the average crystal grain size during heating becomes finer. That is, when the average crystal grain size before continuous annealing is made finer in advance, the interface shifting amount per one crystal grain in the cooling process can be kept small, and thus the distance between the concentrated region at the interface before the start of cooling and the interface after ferrite is generated becomes closer. Generally, since diffusion is faster at the grain boundaries than the grain interior, if the region in which Mn is concentrated is closer to the grain boundaries, it becomes easier for Mn to diffuse due to grain boundary diffusion. The inventors found that, when the interface shifting amount during cooling in continuous annealing is controlled in this manner, the Mn-concentrated part in the cooling process is diffused, and the Mn concentration at the interface between ferrite and martensite, that is, the above ΔMn, can be reduced.

### [Annealing process (continuous annealing process)]

### (c-1) the cold-rolled steel plate is subjected to a heat treatment (annealing process) under an atmosphere with a dew point of -80°C or higher and 20°C or lower.

The dew point in the furnace during continuous annealing is -80°C or higher and 20°C or lower. If the dew point is lower than -80°C, advanced control of the atmosphere in the furnace is required, which lowers the productivity and increases costs. The lower limit of the dew point is preferably -70°C or higher, -60°C or higher, -50°C or higher or -40°C or higher. In addition, when formation of a decarburized layer is not desired, the upper limit of the dew point is preferably -15°C or lower or -20°C or lower. In addition, when a decarburized layer is formed on the surface layer of the steel plate, the carbon concentration in the surface layer is affected by the dew point. In order to sufficiently form a decarburized layer, it is preferable to increase the dew point in the furnace. From this point of view, the dew point when a decarburized layer is formed is preferably higher than -15°C. If the dew point temperature is higher than -15°C, decarburization proceeds easily, and the carbon concentration in the surface layer decreases. Thereby, the bendability of the steel plate is improved. The lower limit of the dew point when a decarburized layer is formed is preferably -10°C or higher. On the other hand, if the dew point is higher than 20°C, decarburization proceeds excessively and the strength of the steel plate decreases. Therefore, the dew point is 20°C or lower. The upper limit of the dew point is preferably 15°C or lower or 5°C or lower.

### (c-2) heat to a temperature range of 740°C or higher and 900°C or lower.

The heating temperature in the annealing process affects the area proportion of the metal structure. If the heating temperature is lower than 740°C, since the amount of austenite generated during heating is small, the area proportion of martensite and tempered martensite after annealing is less than 40%, and the tensile strength is low (for example, less than 900 MPa). In addition, if the heating temperature is lower than 740°C, there is a risk of the average aspect ratio of the annealed structure increasing. If the heating temperature is higher than 900°C, the metal structure becomes coarse, and the breaking resistance deteriorates. Therefore, the heating temperature is 740°C or higher and 900°C or lower, and preferably 780°C or higher and 850°C or lower.

### (c-3) held (retained) for 60 seconds or longer.

The holding time (retention time) at the heating temperature during heating contributes to the amount of austenite generated during heating and affects the area proportion of martensite and tempered martensite after annealing. If the retention time is shorter than 60 seconds, a sufficient amount of austenite is not generated, the area proportion of martensite and tempered martensite after annealing is less than 40%, and the tensile strength is low (for example, less than 900 MPa). The time is preferably 70 seconds or longer and more preferably 80 seconds or longer. The upper limit of the retention time is not particularly specified, and may be 1,800 seconds or shorter in consideration of productivity.

(d) In the annealing process described in (c-1) to (c-3), a coating layer forming process in which a coating layer containing zinc, aluminum, magnesium or an alloy thereof is formed on both surfaces of the steel plate is performed.

In the annealing process, a process of forming a coating layer (for example, a plating layer or an alloyed plating layer) containing zinc, aluminum, magnesium or an alloy thereof on both surfaces of the steel plate may be performed. In addition, after the annealing process, a coating layer may be formed by a method such as electroplating.

### [Examples]

Hereinafter, the present invention will be described in more detail with reference to examples, but the present invention is not limited to these examples.

### <Example 1>

Various steel plates (plate thickness: 1.4 mm) were produced using various slabs having component compositions shown in Table 1A to Table 1C as materials according to various production conditions shown in Table 2A to Table 2D. Here, pickling was performed between the cooling process and the cold rolling process. In Table 1A to Table 1C, the blank indicates that a corresponding element was not intentionally added to the slab or the content of a corresponding element was 0% in a specified significant digit (numerical value to the least significant digit) in the present embodiment. In addition, the unit of the component of each slab was mass%, and the remainder was composed of Fe and impurities.

Here, in the tables, values outside the scope of the invention and values that did not satisfy acceptance/rejection criteria are underlined. In addition, in Table 2A to Table 2D, "plating" indicates whether molten zinc plating was performed in the continuous annealing process, and "alloying" indicates whether an alloying treatment was performed after molten zinc plating.

**[Table 1A]**

| Component | Component composition (mass%), remainder: Fe and impurities | | | | | | | Note |
|---|---|---|---|---|---|---|---|---|
| | C | Si | Mn | P | S | Al | N | |
| Aa | 0.07 | 0.5 | 2.7 | 0.003 | 0.0012 | 0.020 | 0.001 | Invention Example |
| Ab | 0.07 | 1.2 | 2.8 | 0.004 | 0.0034 | 0.020 | 0.004 | |
| Ac | 0.08 | 0.7 | 2.5 | 0.001 | 0.0020 | 0.010 | 0.003 | |
| Ad | 0.09 | 1.0 | 2.8 | 0.003 | 0.0013 | 0.030 | 0.003 | |
| Ae | 0.12 | 1.5 | 2.2 | 0.002 | 0.0033 | 0.140 | 0.002 | |
| Af | 0.10 | 0.4 | 2.7 | 0.001 | 0.0032 | 0.180 | 0.003 | |
| Ag | 0.12 | 0.5 | 2.6 | 0.003 | 0.0025 | 0.160 | 0.003 | |
| Ah | 0.10 | 1.5 | 2.7 | 0.002 | 0.0006 | 0.170 | 0.001 | |
| Ai | 0.12 | 0.5 | 2.5 | 0.001 | 0.0002 | 0.030 | 0.003 | |
| Aj | 0.12 | 1.0 | 2.8 | 0.003 | 0.0027 | 0.040 | 0.003 | |
| Ak | 0.10 | 0.8 | 3.0 | 0.001 | 0.0015 | 0.090 | 0.001 | |
| Al | 0.11 | 1.2 | 2.7 | 0.003 | 0.0030 | 0.110 | 0.002 | |
| Am | 0.12 | 0.5 | 2.7 | 0.002 | 0.0033 | 0.190 | 0.001 | |
| An | 0.12 | 0.7 | 2.5 | 0.003 | 0.0001 | 0.160 | 0.004 | |
| Ao | 0.14 | 0.3 | 2.7 | 0.003 | 0.0004 | 0.120 | 0.002 | |
| Ap | 0.15 | 1.0 | 2.7 | 0.002 | 0.0032 | 0.300 | 0.001 | |
| Aq | 0.15 | 1.5 | 1.5 | 0.002 | 0.0010 | 0.100 | 0.001 | |
| Ar | 0.09 | 1.6 | 1.7 | 0.001 | 0.0017 | 0.080 | 0.002 | |
| As | 0.09 | 0.8 | 2.3 | 0.003 | 0.0017 | 0.060 | 0.001 | |
| At | 0.10 | 1.1 | 2.5 | 0.000 | 0.0007 | 0.190 | 0.003 | |
| Au | 0.13 | 1.6 | 2.0 | 0.001 | 0.0015 | 0.120 | 0.001 | |
| Av | 0.13 | 0.4 | 1.9 | 0.002 | 0.0013 | 0.030 | 0.000 | |
| Aw | 0.15 | 0.3 | 2.2 | 0.003 | 0.0017 | 0.090 | 0.001 | |
| Ax | 0.08 | 0.4 | 2.5 | 0.002 | 0.0036 | 0.040 | 0.000 | |
| Ay | 0.12 | 1.4 | 2.2 | 0.002 | 0.0039 | 0.160 | 0.002 | |
| Az | 0.13 | 0.7 | 1.9 | 0.004 | 0.0006 | 0.140 | 0.003 | |
| Aaa | 0.09 | 1.0 | 2.0 | 0.002 | 0.0030 | 0.170 | 0.002 | |
| Aab | 0.10 | 1.2 | 2.1 | 0.000 | 0.0036 | 0.002 | 0.001 | |
| Aac | 0.14 | 0.5 | 1.6 | 0.001 | 0.0029 | 0.020 | 0.003 | |
| Aad | 0.05 | 0.8 | 2.5 | 0.012 | 0.0021 | 0.022 | 0.002 | Comparative Example |
| Aae | 0.17 | 0.8 | 2.5 | 0.006 | 0.0031 | 0.021 | 0.004 | |
| Aaf | 0.12 | 2.3 | 2.5 | 0.002 | 0.0066 | 0.014 | 0.003 | |
| Aag | 0.12 | 0.6 | 1.2 | 0.013 | 0.0123 | 0.043 | 0.007 | |
| Aah | 0.12 | 0.6 | 3.5 | 0.014 | 0.0096 | 0.077 | 0.010 | |
| Aai | 0.12 | 0.6 | 2.5 | 0.030 | 0.0076 | 0.019 | 0.009 | |
| Aaj | 0.12 | 0.6 | 2.5 | 0.008 | 0.0400 | 0.023 | 0.011 | |
| Aak | 0.12 | 0.6 | 2.5 | 0.012 | 0.0088 | 1.300 | 0.018 | |
| Aal | 0.12 | 0.6 | 2.5 | 0.017 | 0.0124 | 0.039 | 0.050 | |
| Aam | 0.12 | 0.6 | 2.5 | 0.020 | 0.0138 | 0.056 | 0.009 | |

**[Table 1B]**

| Component | Component composition (mass%), remainder: Fe and impurities | | | | | | | | | Note |
|---|---|---|---|---|---|---|---|---|---|---|
| | Co | Ni | Mo | Cr | O | Ti | B | Nb | V | |
| Aa | | | | | 0.0020 | | | | | Invention Example |
| Ab | | | | 0.300 | 0.0010 | | | 0.03 | | |
| Ac | | | | 0.400 | 0.0010 | 0.02 | 0.0020 | | | |
| Ad | | | | | 0.0030 | 0.02 | 0.0010 | | | |
| Ae | | | | 0.500 | 0.0010 | | | 0.03 | | |
| Af | | | | | 0.0030 | | | | 0.100 | |
| Ag | | | 0.200 | | 0.0010 | | 0.0020 | | | |
| Ah | | | | | 0.0030 | | | | | |
| Ai | | | | 0.300 | 0.0020 | | | 0.02 | | |
| Aj | | | | | 0.0010 | | | | | |
| Ak | | | 0.100 | | 0.0010 | | | | | |
| Al | | | | 0.300 | 0.0040 | 0.02 | 0.0020 | | | |
| Am | | | | | 0.0010 | | | | | |
| An | | | | | 0.0020 | | | | | |
| Ao | 0.100 | | 0.100 | | 0.0030 | | | | | |
| Ap | | | | | 0.0030 | | | 0.05 | | |
| Aq | | 0.200 | | | 0.0020 | | | | | |
| Ar | | | 0.010 | 0.400 | 0.0020 | 0.02 | | | | |
| As | | | | 0.200 | 0.0040 | 0.03 | | | | |
| At | | | 0.010 | | 0.0010 | | | | 0.300 | |
| Au | | 0.060 | | | 0.0000 | | 0.0010 | | | |
| Av | | | | | 0.0020 | | | | | |
| Aw | | 0.110 | | 1.300 | 0.0010 | 0.10 | | | 0.100 | |
| Ax | | | | | 0.0010 | | 0.0010 | | | |
| Ay | | | | | 0.0030 | | | 0.40 | | |
| Az | | | 0.800 | | 0.0010 | 0.40 | | | | |
| Aaa | | | | | 0.0020 | | | 0.03 | | |
| Aab | | 0.160 | | | 0.0010 | | | | | |
| Aac | 0.100 | 0.050 | | 1.800 | 0.0020 | 0.02 | 0.0020 | | 0.200 | |
| Aad | | | | | 0.0023 | | | | | Comparative Example |
| Aae | | | | | 0.0011 | | | | | |
| Aaf | | | | | 0.0200 | | | | | |
| Aag | | | | | 0.0024 | | | | | |
| Aah | | | | | 0.0018 | | | | | |
| Aai | | | | | 0.0035 | | | | | |
| Aaj | | | | | 0.0082 | | | | | |
| Aak | | | | | 0.0021 | | | | | |
| Aal | | | | | 0.0100 | | | | | |
| Aam | | | | | 0.0400 | | | | | |

**[Table 1C]**

| Component | Com ponent composition (mass%), remainder: Fe and impurities | | | | | | | | | | Note |
|---|---|---|---|---|---|---|---|---|---|---|---|
| | Cu | W | Ta | Sn | Sb | As | Mg | Ca | Zr | REM | |
| Aa | | | | | | | | | | | Invention Example |
| Ab | | | | | | | | | | | |
| Ac | | | | | | | | | | | |
| Ad | | | | | | | | | | | |
| Ae | | | | | | | | | | | |
| Af | | | | | | | | | | | |
| Ag | | | | | | | | | | | |
| Ah | | | | | | | | | | | |
| Ai | | | | | 0.020 | | | | | | |
| Aj | | | | | | | | | | | |
| Ak | | | | | | | | | | | |
| Al | 0.1 | | | | | | | | | | |
| Am | | | 0.020 | | | | | | | | |
| An | | | | | | | | | | | |
| Ao | | | | 0.020 | | | | | | | |
| Ap | | | | | | | | | 0.030 | | |
| Aq | 0.2 | | | | | | | | | | |
| Ar | | 0.010 | | 0.042 | | 0.010 | | 0.003 | | 0.050 | |
| As | | | 0.010 | | 0.010 | | | | 0.010 | | |
| At | | | | | | | | | | | |
| Au | | | | | | 0.021 | | 0.003 | | | |
| Av | | | | | | | | | | | |
| Aw | | 0.010 | | | | | 0.010 | 0.009 | | | |
| Ax | 0.4 | | | | | | | | 0.026 | | |
| Ay | | | | | | 0.041 | | | | | |
| Az | | | 0.010 | | 0.030 | | | 0.042 | | | |
| Aaa | | | | 0.033 | | | | 0.025 | | | |
| Aab | | | | | | | | | | | |
| Aac | | | 0.080 | 0.021 | 0.010 | | 0.038 | 0.002 | 0.020 | 0.010 | |
| Aad | | | | | | | | | | | Comparative Example |
| Aae | | | | | | | | | | | |
| Aaf | | | | | | | | | | | |
| Aag | | | | | | | | | | | |
| Aah | | | | | | | | | | | |
| Aai | | | | | | | | | | | |
| Aaj | | | | | | | | | | | |
| Aak | | | | | | | | | | | |
| Aal | | | | | | | | | | | |
| Aam | | | | | | | | | | | |

**[Table 2A]**

| Test No. | Component | Hot rolling process | | | Coiling process | Holding process | Cooling process | Note |
|---|---|---|---|---|---|---|---|---|
| | | Finish rolling start temperature (°C) | Final stand temperature (°C) | Final stand plate thickness reduction rate (%) | Coiling temperature (°C) | Holding time (hr) | Average cooling rate (°C/s) | |
| A1 | Aa | 1061 | 853 | 38 | 643 | 7 | 0.7 | Invention Example |
| A2 | Aa | 1088 | 876 | 50 | 515 | 8 | 0.5 | |
| A3 | Aa | 1039 | 859 | 35 | 600 | 3 | 0.4 | |
| A4 | Ab | 1029 | 858 | 36 | 590 | 7 | 0.3 | |
| A5 | Ab | 1003 | 877 | 51 | 545 | 5 | 0.4 | |
| A6 | Ab | 1058 | 890 | 44 | 618 | 4 | 0.3 | |
| A7 | Ac | 1043 | 882 | 52 | 595 | 3 | 0.3 | |
| A8 | Ac | 1039 | 875 | 44 | 562 | 5 | 1.3 | |
| A9 | Ad | 1046 | 845 | 51 | 545 | 6 | 0.4 | |
| A10 | Ae | 1068 | 845 | 34 | 573 | 6 | 0.7 | |
| A11 | Af | 1020 | 833 | 51 | 487 | 2 | 4.5 | |
| A12 | Ag | 1028 | 880 | 47 | 601 | 2 | 0.8 | |
| A13 | Ag | 1037 | 849 | 44 | 521 | 3 | 0.4 | |
| A14 | Ah | 999 | 859 | 42 | 601 | 3 | 0.5 | |
| A15 | Ai | 1054 | 852 | 47 | 506 | 5 | 10.2 | |
| A16 | Aj | 1036 | 857 | 39 | 489 | 4 | 0.9 | |
| A17 | Ak | 1057 | 830 | 44 | 511 | 2 | 0.9 | |
| A18 | Ak | 1019 | 849 | 42 | 502 | 4 | 0.9 | |
| A19 | Al | 1056 | 880 | 42 | 614 | 7 | 0.8 | |
| A20 | Al | 1052 | 866 | 38 | 554 | 7 | 0.6 | |
| A21 | Am | 1034 | 880 | 45 | 535 | 2 | 0.4 | |
| A22 | An | 1057 | 875 | 35 | 564 | 6 | 0.7 | |
| A23 | Ao | 1027 | 891 | 49 | 502 | 4 | 0.9 | |
| A24 | Ap | 1058 | 884 | 49 | 543 | 2 | 0.2 | |
| A25 | Aq | 1048 | 849 | 39 | 517 | 4 | 0.9 | |
| A26 | Ar | 1035 | 865 | 49 | 514 | 7 | 0.5 | |
| A27 | As | 1018 | 842 | 33 | 595 | 5 | 0.8 | |
| A28 | At | 1060 | 873 | 40 | 468 | 4 | 0.5 | |
| A29 | Au | 1046 | 886 | 48 | 510 | 2 | 0.5 | |
| A30 | Av | 1045 | 862 | 36 | 528 | 4 | 0.7 | |
| A31 | Aw | 1028 | 859 | 49 | 502 | 6 | 0.3 | |
| A32 | Ax | 1018 | 845 | 35 | 517 | 5 | 0.8 | |
| A33 | Ay | 1044 | 836 | 43 | 566 | 5 | 0.6 | |
| A34 | Az | 1025 | 844 | 37 | 596 | 3 | 0.3 | |
| A35 | Aaa | 1045 | 841 | 46 | 624 | 5 | 0.7 | |
| A36 | Aab | 1018 | 880 | 42 | 568 | 5 | 0.2 | |
| A37 | Aac | 969 | 879 | 50 | 579 | 2 | 0.6 | |

**[Table 2B]**

| Test No. | Component | Hot rolling process | | | Coiling process | Holding process | Cooling process | Note |
|---|---|---|---|---|---|---|---|---|
| | | Finish rolling start temperature (°C) | Final stand temperature (°C) | Final stand plate thickness reduction rate (%) | Coiling temperature (°C) | Holding time (hr) | Average cooling rate (°C/s) | |
| A38 | Aad | - | 892 | 41 | 611 | 4 | 0.4 | Comparative Example |
| A39 | Aae | - | 886 | 38 | 639 | 4 | 0.7 | |
| A40 | Aaf | - | 892 | 41 | 621 | 4 | 1.0 | |
| A41 | Aag | - | 837 | 31 | 570 | 6 | 0.6 | |
| A42 | Aah | - | 869 | 42 | 599 | 6 | 0.4 | |
| A43 | Aai | - | 855 | 32 | 571 | 5 | 0.7 | |
| A44 | Aaj | - | 858 | 52 | 535 | 5 | 0.3 | |
| A45 | Aak | - | 850 | 43 | 482 | 2 | 0.9 | |
| A46 | Aal | - | 878 | 45 | 501 | 3 | 0.5 | |
| A47 | Aam | - | 875 | 34 | 567 | 7 | 0.2 | |
| A48 | Aa | - | 910 | 39 | 643 | 5 | 0.5 | Comparative Example |
| A49 | Aa | - | 853 | 18 | 643 | 5 | 0.8 | |
| A50 | Aa | - | 853 | 39 | 433 | 5 | 0.6 | |
| A51 | Aa | - | 853 | 39 | 672 | 6 | 0.6 | |
| A52 | Ag | - | 849 | 44 | 521 | 9 | 0.8 | |
| A53 | Ag | - | 849 | 44 | 521 | 3 | 0.08 | |
| A54 | Ak | - | 830 | 44 | 511 | 2 | 0.4 | |
| A55 | Ak | - | 830 | 44 | 511 | 6 | 0.1 | |
| A56 | A1 | 1051 | 866 | 38 | 554 | 5 | 0.6 | Invention Example |
| A57 | Al | - | 866 | 38 | 554 | 3 | 0.6 | Comparative Example |
| A58 | Al | - | 866 | 38 | 554 | 5 | 0.6 | |
| A59 | Al | - | 866 | 38 | 554 | 4 | 0.6 | |

**[Table 2C]**

| Test No. | Cold rolling process | Continuous annealing process | | | | | Note |
|---|---|---|---|---|---|---|---|
| | Plate thickness reduction rate (%) | Dew point (°C) | Heating temperature (°C) | Holding time (s) | Plating | Alloying | |
| A1 | 66 | -27 | 782 | 265 | Yes | Yes | Invention Example |
| A2 | 57 | -38 | 787 | 220 | Yes | No | |
| A3 | 59 | -25 | 799 | 131 | No | No | |
| A4 | 36 | -29 | 850 | 270 | Yes | Yes | |
| A5 | 31 | -15 | 856 | 145 | No | No | |
| A6 | 57 | -27 | 837 | 169 | Yes | No | |
| A7 | 32 | -15 | 831 | 125 | No | No | |
| A8 | 70 | -23 | 803 | 93 | Yes | Yes | |
| A9 | 42 | -18 | 856 | 140 | No | No | |
| A10 | 37 | -37 | 823 | 286 | Yes | Yes | |
| A11 | 30 | -27 | 760 | 101 | No | No | |
| A12 | 66 | -32 | 799 | 112 | Yes | Yes | |
| A13 | 72 | -37 | 788 | 157 | Yes | Yes | |
| A14 | 33 | -20 | 854 | 182 | Yes | No | |
| A15 | 52 | -29 | 823 | 215 | No | No | |
| A16 | 42 | -39 | 823 | 208 | Yes | Yes | |
| A17 | 38 | -19 | 847 | 191 | No | No | |
| A18 | 67 | -15 | 793 | 183 | No | No | |
| A19 | 40 | -32 | 853 | 102 | Yes | Yes | |
| A20 | 35 | -27 | 831 | 73 | Yes | Yes | |
| A21 | 42 | -15 | 811 | 117 | No | No | |
| A22 | 63 | -38 | 810 | 96 | No | No | |
| A23 | 42 | -36 | 814 | 224 | Yes | Yes | |
| A24 | 52 | -19 | 836 | 201 | Yes | Yes | |
| A25 | 46 | -31 | 803 | 103 | No | No | |
| A26 | 50 | -28 | 821 | 199 | Yes | Yes | |
| A27 | 34 | -40 | 839 | 160 | No | No | |
| A28 | 35 | -27 | 793 | 128 | No | No | |
| A29 | 73 | -15 | 832 | 204 | Yes | Yes | |
| A30 | 63 | -24 | 811 | 75 | Yes | Yes | |
| A31 | 50 | -17 | 788 | 195 | Yes | Yes | |
| A32 | 61 | -32 | 785 | 244 | Yes | Yes | |
| A33 | 43 | -22 | 859 | 285 | Yes | Yes | |
| A34 | 55 | -23 | 829 | 204 | Yes | Yes | |
| A35 | 30 | -34 | 771 | 168 | Yes | Yes | |
| A36 | 33 | -39 | 753 | 100 | No | No | |
| A37 | 49 | -19 | 824 | 167 | No | No | |

**[Table 2D]**

| Test No. | Cold rolling process | Continuous annealing process | | | | | Note |
|---|---|---|---|---|---|---|---|
| | Plate thickness reduction rate (%) | Dew point (°C) | Heating temperature (°C) | Holding time (s) | Plating | Alloying | |
| A38 | 48 | -31 | 870 | 293 | No | No | Comparative Example |
| A39 | 75 | -17 | 812 | 141 | Yes | Yes | |
| A40 | 69 | -17 | 858 | 227 | Yes | Yes | |
| A41 | 63 | -16 | 819 | 67 | No | No | |
| A42 | 61 | -23 | 794 | 240 | No | No | |
| A43 | 40 | -26 | 850 | 179 | Yes | Yes | |
| A44 | 56 | -36 | 817 | 130 | Yes | No | |
| A45 | 25 | -32 | 783 | 202 | Yes | Yes | |
| A46 | 74 | -31 | 840 | 231 | Yes | Yes | |
| A47 | 76 | -31 | 819 | 85 | Yes | No | |
| A48 | 61 | -36 | 840 | 198 | Yes | No | Comparative Example |
| A49 | 36 | -35 | 830 | 242 | Yes | No | |
| A50 | 43 | -33 | 835 | 275 | No | No | |
| A51 | 72 | -26 | 801 | 116 | Yes | No | |
| A52 | 39 | -24 | 786 | 184 | Yes | Yes | |
| A53 | 43 | -26 | 802 | 192 | Yes | Yes | |
| A54 | 10 | -23 | 790 | 94 | Yes | Yes | |
| A55 | 90 | -34 | 823 | 237 | Yes | No | |
| A56 | 35 | -15 | 868 | 132 | Yes | Yes | Invention Example |
| A57 | 35 | -22 | 720 | 200 | No | No | Comparative Example |
| A58 | 35 | -36 | 930 | 200 | No | No | |
| A59 | 35 | -20 | 800 | 40 | No | No | |

In a metal structure (ferrite, bainite, martensite, tempered martensite, pearlite and retained austenite (residual γ)) in a range of 1/8 to 3/8 of the thickness centering on the position of 1/4 of the plate thickness (a 1/4 part of the plate thickness) from the surface of these steel plates, in a 1/4 part of the plate thickness, a ratio (N₃/N_{T}) of the number N₃ of crystal grains of the ferrite and the bainite having an area of 3 µm² or less to a total number N_{T} of crystal grains of the ferrite and the bainite, a ratio (N₃₀/N_{T}) of the number N₃₀ of crystal grains of the ferrite and the bainite having an area of 30 µm² or more to a total number N_{T} of crystal grains of the ferrite and the bainite, a difference ΔMn ([Mn_{0.5}]-[M_{1.0}]) between an Mn concentration [Mn_{1.0}] at a position of 1.0 µm from an interface between ferrite and martensite in a direction perpendicular to the interface and inward into ferrite grains and a maximum value [Mn_{0.5}] of an Mn concentration in a region up to 0.5 µm therefrom, and the average aspect ratio of ferrite and bainite having an area of 3 µm² or less in a 1/4 part of the plate thickness were evaluated and shown in Table 3A and Table 3B. These evaluations were performed according to the above methods.

In addition, the tensile strength (TS1), the uniform elongation (uEl), the local elongation (lEl) and the tensile strength (TS2) of a tensile test piece with a punched hole of these steel plates were evaluated and shown in Table 3C and Table 3D. These evaluation methods ae as follows.

A JIS No. 5 test piece was collected from the steel plate, a tensile test was performed according to JIS Z 2241: 2011 so that the longitudinal direction was perpendicular to the rolling direction of the steel plate, and thereby the tensile strength (TS1) of the steel plate was evaluated. A steel plate having a tensile strength (TS1) of 890 MPa or more (preferably 900 MPa or more) was determined to be satisfactory in terms of tensile strength.

A JIS No. 5 test piece was collected from the steel plate, a tensile test was performed according to JIS Z 2241: 2011 so that the longitudinal direction was perpendicular to the rolling direction of the steel plate, and thereby the elongations (uEl, lEl) of the steel plate were evaluated. A steel plate having a uniform elongation (uEl) of 5.5% or more and a local elongation (lEl) of 3.2% or more was determined to be satisfactory in terms of formability.

A JIS No. 5 test piece was collected from a steel plate so that the longitudinal direction was perpendicular to the rolling direction of the steel plate, a 10 mmϕ hole was punched in the center of the parallel part with a clearance of 10%, a tensile test was performed according to JIS Z 2241: 2011, and thereby the tensile strength (TS2) of the tensile test piece with a punched hole was evaluated. TS2/TS1 was determined from the obtained TS2, and one having a value of 0.50 or more was determined to be satisfactory in terms of breaking resistance.

**[Table 3A]**

| Test No. | Component | Structure proportion (area proportion) | | | Properties of structure | | | | Note |
|---|---|---|---|---|---|---|---|---|---|
| | | Ferrite and bainite (%) | Martensite and tempered martensite (%) | Pearlite and residual γ (%) | N₃/N_{T} (%) | N₃₀/N_{T} (%) | Average aspect ratio | ΔMn (mass%) | |
| A1 | Aa | 55 | 45 | 0 | 73 | 1 | 1.5 | 0.42 | Invention Example |
| A2 | Aa | 59 | 41 | 0 | 83 | 0 | 1.8 | 0.38 | |
| A3 | Aa | 51 | 49 | 0 | 45 | 2 | 1.8 | 0.72 | |
| A4 | Ab | 37 | 63 | 0 | 53 | 2 | 1.2 | 0.58 | |
| A5 | Ab | 33 | 67 | 0 | 81 | 0 | 1.1 | 0.46 | |
| A6 | Ab | 45 | 55 | 0 | 54 | 2 | 1.5 | 0.58 | |
| A7 | Ac | 36 | 64 | 0 | 79 | 1 | 1.3 | 0.46 | |
| A8 | Ac | 55 | 45 | 0 | 77 | 1 | 1.7 | 0.44 | |
| A9 | Ad | 23 | 77 | 0 | 91 | 0 | 1.4 | 0.40 | |
| A10 | Ae | 51 | 40 | 9 | 41 | 3 | 1.2 | 0.76 | |
| A11 | Af | 55 | 45 | 0 | 94 | 0 | 1.3 | 0.38 | |
| A12 | Ag | 42 | 58 | 0 | 79 | 1 | 1.8 | 0.38 | |
| A13 | Ag | 48 | 52 | 0 | 83 | 0 | 1.6 | 0.38 | |
| A14 | Ah | 30 | 70 | 0 | 85 | 0 | 1.3 | 0.36 | |
| A15 | Ai | 31 | 69 | 0 | 88 | 0 | 1.6 | 0.36 | |
| A16 | Aj | 39 | 61 | 0 | 68 | 1 | 1.4 | 0.50 | |
| A17 | Ak | 22 | 78 | 0 | 76 | 1 | 1.3 | 0.46 | |
| A18 | Ak | 54 | 46 | 0 | 81 | 0 | 1.5 | 0.44 | |
| A19 | Al | 25 | 75 | 0 | 55 | 2 | 1.2 | 0.64 | |
| A20 | Al | 38 | 62 | 0 | 49 | 2 | 1.1 | 0.70 | |
| A21 | Am | 30 | 70 | 0 | 69 | 1 | 1.3 | 0.48 | |
| A22 | An | 36 | 64 | 0 | 48 | 2 | 1.5 | 0.62 | |
| A23 | Ao | 25 | 75 | 0 | 69 | 1 | 1.4 | 0.48 | |
| A24 | Ap | 22 | 78 | 0 | 73 | 1 | 1.2 | 0.42 | |
| A25 | Aq | 49 | 42 | 9 | 77 | 1 | 1.2 | 0.44 | |
| A26 | Ar | 49 | 41 | 10 | 68 | 1 | 1.6 | 0.44 | |
| A27 | As | 30 | 70 | 0 | 54 | 2 | 1.4 | 0.60 | |
| A28 | At | 58 | 42 | 0 | 48 | 2 | 1.4 | 0.62 | |
| A29 | Au | 43 | 57 | 0 | 63 | 1 | 1.5 | 0.50 | |
| A30 | Av | 33 | 67 | 0 | 57 | 2 | 1.3 | 0.52 | |
| A31 | Aw | 57 | 43 | 0 | 84 | 0 | 1.0 | 0.40 | |
| A32 | Ax | 55 | 45 | 0 | 54 | 2 | 1.3 | 0.56 | |
| A33 | Ay | 47 | 53 | 0 | 79 | 1 | 1.1 | 0.46 | |
| A34 | Az | 39 | 61 | 0 | 72 | 1 | 1.5 | 0.50 | |
| A35 | Aaa | 55 | 45 | 0 | 82 | 0 | 1.2 | 0.46 | |
| A36 | Aab | 55 | 45 | 0 | 49 | 2 | 1.4 | 0.62 | |
| A37 | Aac | 47 | 53 | 0 | 81 | 0 | 1.4 | 0.42 | |

**[Table 3B]**

| Test No. | Component | Structure proportion (area proportion) | | | Properties of structure | | | | Note |
|---|---|---|---|---|---|---|---|---|---|
| | | Ferrite and bainite (%) | Martensite and tempered martensite (%) | Pearlite and residual γ (%) | N₃/N_{T} (%) | N₃₀/N_{T} (%) | Average aspect ratio | ΔMn (mass%) | |
| A38 | Aad | 73 | 27 | 0 | 41 | 3 | 1.2 | 0.82 | Comparative Example |
| A39 | Aae | 9 | 91 | 0 | 47 | 2 | 1.6 | 0.68 | |
| A40 | Aaf | 45 | 55 | 0 | 76 | 1 | 1.8 | 0.48 | |
| A41 | Aag | 58 | 34 | 8 | 45 | 2 | 1.3 | 0.72 | |
| A42 | Aah | 5 | 95 | 0 | 67 | 1 | 1.7 | 0.46 | |
| A43 | Aai | 12 | 88 | 0 | 63 | 1 | 1.5 | 0.54 | |
| A44 | Aaj | 35 | 65 | 0 | 82 | 0 | 1.5 | 0.46 | |
| A45 | Aak | 23 | 77 | 0 | 76 | 1 | 1.1 | 0.48 | |
| A46 | Aal | 18 | 82 | 0 | 73 | 1 | 1.9 | 0.48 | |
| A47 | Aam | 32 | 68 | 0 | 69 | 1 | 1.8 | 0.52 | |
| A48 | Aa | 25 | 75 | 0 | 38 | 3 | 1.7 | 0.78 | Comparative Example |
| A49 | Aa | 31 | 69 | 0 | 29 | 3 | 1.1 | 1.10 | |
| A50 | Aa | Could not be cold-rolled due to an increase in cold rolling load | | | | | | | |
| A51 | Aa | 50 | 50 | 0 | 38 | 13 | 2.3 | 0.82 | |
| A52 | Ag | 49 | 51 | 0 | 76 | 8 | 2.1 | 0.46 | |
| A53 | Ag | 40 | 60 | 0 | 78 | 6 | 2.2 | 0.42 | |
| A54 | Ak | 56 | 44 | 0 | 23 | 4 | 2.3 | 1.28 | |
| A55 | Ak | Could not be cold-rolled due to an increase in cold rolling load | | | | | | | |
| A56 | Al | 16 | 84 | 0 | 51 | 2 | 1.2 | 0.34 | Invention Example |
| A57 | Al | 100 | 0 | 0 | 100 | 0 | 5.0 | 0.34 | Comparative Example |
| A58 | Al | 0 | 100 | 0 | 0 | 5 | - | | |
| A59 | Al | 56 | 37 | 7 | 48 | 3 | 1.4 | 0.53 | |

**[Table 3C]**

| Test No. | Properties | | | | | Note |
|---|---|---|---|---|---|---|
| | Tensile strength TS1 (MPa) | Uniform elongation uE1 (%) | Local elongation 1E1 (%) | Tensile strength TS2 (MPa) | TS2/TS1 | |
| A1 | 976 | 9.9 | 6.2 | 757 | 0.78 | Invention Example |
| A2 | 988 | 9.4 | 6.4 | 821 | 0.83 | |
| A3 | 1016 | 11.4 | 3.6 | 613 | 0.60 | |
| A4 | 1069 | 9.4 | 4.3 | 703 | 0.66 | |
| A5 | 1082 | 8.2 | 5.1 | 864 | 0.80 | |
| A6 | 1041 | 10.1 | 4.3 | 679 | 0.65 | |
| A7 | 1098 | 8.6 | 5.0 | 863 | 0.79 | |
| A8 | 1040 | 9.8 | 5.6 | 799 | 0.77 | |
| A9 | 1178 | 7.3 | 4.9 | 1018 | 0.86 | |
| A10 | 1113 | 10.5 | 3.7 | 667 | 0.60 | |
| A11 | 1091 | 9.2 | 6.9 | 973 | 0.89 | |
| A12 | 1219 | 8.4 | 5.7 | 996 | 0.82 | |
| A13 | 1201 | 8.6 | 6.1 | 1006 | 0.84 | |
| A14 | 1197 | 7.1 | 5.8 | 1040 | 0.87 | |
| A15 | 1258 | 7.4 | 5.6 | 1100 | 0.87 | |
| A16 | 1236 | 9.1 | 4.7 | 891 | 0.72 | |
| A17 | 1219 | 7.7 | 4.5 | 941 | 0.77 | |
| A18 | 1117 | 9.6 | 5.6 | 883 | 0.79 | |
| A19 | 1239 | 8.8 | 3.6 | 814 | 0.66 | |
| A20 | 1197 | 9.9 | 3.9 | 759 | 0.63 | |
| A21 | 1265 | 8.4 | 4.6 | 931 | 0.74 | |
| A22 | 1235 | 9.8 | 3.8 | 781 | 0.63 | |
| A23 | 1348 | 8.1 | 4.3 | 990 | 0.73 | |
| A24 | 1382 | 7.3 | 4.9 | 1090 | 0.79 | |
| A25 | 1192 | 9.1 | 5.8 | 941 | 0.79 | |
| A26 | 968 | 9.4 | 5.4 | 717 | 0.74 | |
| A27 | 1162 | 9.1 | 3.8 | 756 | 0.65 | |
| A28 | 1103 | 11.2 | 4.5 | 696 | 0.63 | |
| A29 | 1256 | 9.4 | 4.7 | 884 | 0.70 | |
| A30 | 1289 | 8.8 | 4.4 | 880 | 0.68 | |
| A31 | 1286 | 8.8 | 6.7 | 1100 | 0.86 | |
| A32 | 1036 | 10.6 | 4.9 | 689 | 0.66 | |
| A33 | 1202 | 9.1 | 5.6 | 958 | 0.80 | |
| A34 | 1267 | 9.2 | 4.6 | 930 | 0.73 | |
| A35 | 1025 | 10.6 | 6.3 | 816 | 0.80 | |
| A36 | 980 | 13.8 | 5.5 | 622 | 0.63 | |
| A37 | 1278 | 8.9 | 5.7 | 1032 | 0.81 | |

**[Table 3D]**

| Test No. | Properties | | | | | Note |
|---|---|---|---|---|---|---|
| | Tensile strength TS1 (MPa) | Uniform elongation uE1 (%) | Local elongation 1E1 (%) | Tensile strength TS2 (MPa) | TS2/TS1 | |
| A38 | 669 | 14.9 | 5.3 | 391 | 0.58 | Comparative Example |
| A39 | 1414 | 10.1 | 3.5 | 670 | 0.47 | |
| A40 | 1213 | 9.6 | 4.8 | 555 | 0.46 | |
| A41 | 836 | 11.8 | 4.6 | 591 | 0.71 | |
| A42 | 1211 | 9.4 | 1.2 | 527 | 0.44 | |
| A43 | 1312 | 7.7 | 3.5 | 531 | 0.40 | |
| A44 | 1242 | 8.6 | 4.8 | 576 | 0.46 | |
| A45 | 1279 | 7.8 | 4.5 | 533 | 0.42 | |
| A46 | 1293 | 7.9 | 3.9 | 579 | 0.45 | |
| A47 | 1256 | 9.1 | 4.1 | 526 | 0.42 | |
| A48 | 1107 | 9.6 | 2.9 | 542 | 0.49 | Comparative Example |
| A49 | 1087 | 10.3 | 2.8 | 504 | 0.46 | |
| A50 | Could not be cold-rolled due to an increase in cold rolling load | | | | | |
| A51 | 1021 | 11.8 | 3.1 | 502 | 0.49 | |
| A52 | 1199 | 9.8 | 5.0 | 499 | 0.42 | |
| A53 | 1233 | 8.9 | 5.0 | 532 | 0.43 | |
| A54 | 1113 | 7.2 | 2.3 | 487 | 0.44 | |
| A55 | Could not be cold-rolled due to an increase in cold rolling load | | | | | |
| A56 | 901 | 8.4 | 3.2 | 688 | 0.76 | Invention Example |
| A57 | 450 | 4.0 | 0.2 | 212 | 0.47 | Comparative Example |
| A58 | 1335 | 4.2 | 2.3 | 911 | 0.46 | |
| A59 | 853 | 4.5 | 3.4 | 558 | 0.65 | |

It was found that, in invention examples (Test Nos. A1 to A37, and A56) that satisfied both the component composition and production conditions, all the structure ratio of the metal structure, and features and properties of the structure were within the scope of the invention, and steel plates that simultaneously satisfied having high levels of formability and breaking resistance were obtained.

On the other hand, in comparative examples (Test Nos. A38 to A55, and A57 to A59) in which any one of the component composition and production conditions did not satisfy the scope of the invention, at least one of the structure ratio and features of the structure was outside the scope of the invention, and as a result, any of the properties deteriorated.

Test Nos. A38 to A47 were comparative examples in which the component composition was outside the scope of the invention, but any of the properties deteriorated.

Test Nos. A48 to A55, and A57 to A59 were comparative examples in which any of conditions in the production method was outside the scope of the invention.

In Test No. A48, since the temperature of the hot rolling final stand was too high, a sufficient N₃/N_{T} could not be secured, and as a result, TS2/TS1 and the local elongation, which are indexes of ductility of the punched end surface, deteriorated.

In Test No. A49, since the plate thickness reduction rate in the hot rolling final stand was too small, a large amount of recrystallized grain nucleation sites could not be uniformly dispersed during hot rolling, the structure after annealing was insufficiently refined, a sufficient N₃/N_{T} could not be secured, and additionally, ΔMn also increased. As a result, TS2/TS1 and the local elongation deteriorated.

In Test No. A50, since the coiling temperature was too low, the strength of the hot-rolled plate increased significantly, the cold rolling load increased, and cold rolling could not be performed.

In Test No. A51, since the coiling temperature was too high, a sufficient N₃/N_{T} could not be secured, N₃₀/N_{T} also increased, and as a result, TS2/TS1 and the local elongation deteriorated.

In Test No. A52, since the holding time in the holding process was too long, the concentration of elements such as Mn in the carbide was promoted, the grain size of the structure after annealing became coarse and mixed grains were formed, N₃₀/N_{T} became too high, and as a result, TS2/TS1 deteriorated.

In Test No. A53, since the average cooling rate of the cooling process was too slow, the concentration of elements such as Mn in the carbide was promoted, the grain size of the structure after annealing became coarse and mixed grains were formed, N₃₀/N_{T} became too high, and as a result, TS2/TS1 deteriorated.

In Test No. A54, since the plate thickness reduction rate in the cold rolling process was too small, strain accumulation in the steel plate became insufficient, austenite nucleation sites during annealing became non-uniform, the grain size after annealing became coarse and mixed grains were formed, a sufficient N₃/N_{T} could not be secured, and additionally, ΔMn also increased. As a result, TS2/TS1 and the local elongation deteriorated.

In Test No. A55, since the plate thickness reduction rate in the cold rolling process was too large, cold rolling could not be performed.

In Test No. A57, since the heating temperature in the annealing process was too low, the amount of austenite during heating was small, and martensite and tempered martensite after annealing could not be secured. As a result, the tensile strength TS1 significantly decreased, and both the uniform elongation and local elongation deteriorated.

In Test No. A58, since the heating temperature in the annealing process was too high, ferrite and bainite after annealing could not be secured. As a result, the area proportion of martensite was excessively high, and TS2/TS1, the uniform elongation and the local elongation deteriorated.

In Test No. A59, since the holding time in the annealing process was too short, a sufficient amount of austenite was not generated, undissolved carbides remained in austenite, the area proportion of martensite and tempered martensite after annealing was less than 40%, the ductility of each martensite was reduced by undissolved carbides, and thus the tensile strength TS1 and the uniform elongation deteriorated.

### <Example 2>

Next, a case of forming a decarburized layer on the surface layer of the steel plate will be described.

In the same manner as in Example 1, various steel plates (plate thickness: 1.4 mm) were produced using various slabs having component compositions shown in Table 4A to Table 4C as materials according to various production conditions shown in Table 5A to Table 5D. Here, pickling was performed between the cooling process and the cold rolling process. In Table 4A to Table 4C, the blank indicates that a corresponding element was not intentionally added to the slab of the content of a corresponding element was 0% in a specified significant digit (numerical value to the least significant digit) in the present embodiment. In addition, the unit of the component of each slab was mass%, and the remainder was composed of Fe and impurities.

Here, in the tables, values outside the scope of the invention and values that did not satisfy acceptance/rejection criteria are underlined. In addition, Table 5A to Table 5D, "plating" indicates whether molten zinc plating was performed in the continuous annealing process, and "alloying" indicates whether an alloying treatment was performed after molten zinc plating.

**[Table 4A]**

| Component | Component composition (mass%), remainder: Fe and impurities | | | | | | | Note |
|---|---|---|---|---|---|---|---|---|
| | C | Si | Mn | P | S | Al | N | |
| Ba | 0.07 | 0.5 | 2.7 | 0.003 | 0.0012 | 0.020 | 0.001 | Invention Example |
| Bb | 0.07 | 1.2 | 2.8 | 0.004 | 0.0034 | 0.020 | 0.004 | |
| Be | 0.08 | 0.7 | 2.5 | 0.001 | 0.0020 | 0.010 | 0.003 | |
| Bd | 0.09 | 1.0 | 2.8 | 0.003 | 0.0013 | 0.030 | 0.003 | |
| Be | 0.12 | 1.5 | 2.2 | 0.002 | 0.0033 | 0.140 | 0.002 | |
| Bf | 0.10 | 0.4 | 2.7 | 0.001 | 0.0032 | 0.180 | 0.003 | |
| Bg | 0.12 | 0.5 | 2.6 | 0.003 | 0.0025 | 0.160 | 0.003 | |
| Bh | 0.10 | 1.5 | 2.7 | 0.002 | 0.0006 | 0.170 | 0.001 | |
| Bi | 0.12 | 0.5 | 2.5 | 0.001 | 0.0002 | 0.030 | 0.003 | |
| Bj | 0.12 | 1.0 | 2.8 | 0.003 | 0.0027 | 0.040 | 0.003 | |
| Bk | 0.10 | 0.8 | 3.0 | 0.001 | 0.0015 | 0.090 | 0.001 | |
| Bl | 0.11 | 1.2 | 2.7 | 0.003 | 0.0030 | 0.110 | 0.002 | |
| Bm | 0.12 | 0.5 | 2.7 | 0.002 | 0.0033 | 0.190 | 0.001 | |
| Bn | 0.12 | 0.7 | 2.5 | 0.003 | 0.0001 | 0.160 | 0.004 | |
| Bo | 0.14 | 0.3 | 2.7 | 0.003 | 0.0004 | 0.120 | 0.002 | |
| Bp | 0.15 | 1.0 | 2.7 | 0.002 | 0.0032 | 0.300 | 0.001 | |
| Bq | 0.15 | 1.5 | 1.5 | 0.002 | 0.0010 | 0.100 | 0.001 | |
| Br | 0.09 | 1.6 | 1.7 | 0.001 | 0.0017 | 0.080 | 0.002 | |
| Bs | 0.09 | 0.8 | 2.3 | 0.003 | 0.0017 | 0.060 | 0.001 | |
| Bt | 0.10 | 1.1 | 2.5 | 0.000 | 0.0007 | 0.190 | 0.003 | |
| Bu | 0.13 | 1.6 | 2.0 | 0.001 | 0.0015 | 0.120 | 0.001 | |
| Bv | 0.13 | 0.4 | 1.9 | 0.002 | 0.0013 | 0.030 | 0.000 | |
| Bw | 0.15 | 0.3 | 2.2 | 0.003 | 0.0017 | 0.090 | 0.001 | |
| Bx | 0.08 | 0.4 | 2.5 | 0.002 | 0.0036 | 0.040 | 0.000 | |
| By | 0.12 | 1.4 | 2.2 | 0.002 | 0.0039 | 0.160 | 0.002 | |
| Bz | 0.13 | 0.7 | 1.9 | 0.004 | 0.0006 | 0.140 | 0.003 | |
| Baa | 0.09 | 1.0 | 2.0 | 0.002 | 0.0030 | 0.170 | 0.002 | |
| Bab | 0.10 | 1.2 | 2.1 | 0.000 | 0.0036 | 0.002 | 0.001 | |
| Bac | 0.14 | 0.5 | 1.6 | 0.001 | 0.0029 | 0.020 | 0.003 | |
| Bad | 0.05 | 0.8 | 2.5 | 0.012 | 0.0021 | 0.022 | 0.002 | Comparative Example |
| Bae | 0.17 | 0.8 | 2.5 | 0.006 | 0.0031 | 0.021 | 0.004 | |
| Baf | 0.12 | 2.3 | 2.5 | 0.002 | 0.0066 | 0.014 | 0.003 | |
| Bag | 0.12 | 0.6 | 1.2 | 0.013 | 0.0123 | 0.043 | 0.007 | |
| Bah | 0.12 | 0.6 | 3.5 | 0.014 | 0.0096 | 0.077 | 0.010 | |
| Bai | 0.12 | 0.6 | 2.5 | 0.030 | 0.0076 | 0.019 | 0.009 | |
| Baj | 0.12 | 0.6 | 2.5 | 0.008 | 0.0400 | 0.023 | 0.011 | |
| Bak | 0.12 | 0.6 | 2.5 | 0.012 | 0.0088 | 1.300 | 0.018 | |
| Bal | 0.12 | 0.6 | 2.5 | 0.017 | 0.0124 | 0.039 | 0.050 | |
| Bam | 0.12 | 0.6 | 2.5 | 0.020 | 0.0138 | 0.056 | 0.009 | |

**[Table 4B]**

| Component | Component composition (mass%), remainder: Fe and impurities | | | | | | | | | Note |
|---|---|---|---|---|---|---|---|---|---|---|
| | Co | Ni | Mo | Cr | O | Ti | B | Nb | V | |
| Ba | | | | | 0.0020 | | | | | Invention Example |
| Bb | | | | 0.300 | 0.0010 | | | 0.03 | | |
| Be | | | | 0.400 | 0.0010 | 0.02 | 0.0020 | | | |
| Bd | | | | | 0.0030 | 0.02 | 0.0010 | | | |
| Be | | | | 0.500 | 0.0010 | | | 0.03 | | |
| Bf | | | | | 0.0030 | | | | 0.100 | |
| Bg | | | 0.200 | | 0.0010 | | 0.0020 | | | |
| Bh | | | | | 0.0030 | | | | | |
| Bi | | | | 0.300 | 0.0020 | | | 0.02 | | |
| Bj | | | | | 0.0010 | | | | | |
| Bk | | | 0.100 | | 0.0010 | | | | | |
| Bl | | | | 0.300 | 0.0040 | 0.02 | 0.0020 | | | |
| Bm | | | | | 0.0010 | | | | | |
| Bn | | | | | 0.0020 | | | | | |
| Bo | 0.100 | | 0.100 | | 0.0030 | | | | | |
| Bp | | | | | 0.0030 | | | 0.05 | | |
| Bq | | 0.200 | | | 0.0020 | | | | | |
| Br | | | 0.010 | 0.400 | 0.0020 | 0.02 | | | | |
| Bs | | | | 0.200 | 0.0040 | 0.03 | | | | |
| Bt | | | 0.010 | | 0.0010 | | | | 0.300 | |
| Bu | | 0.060 | | | 0.0000 | | 0.0010 | | | |
| Bv | | | | | 0.0020 | | | | | |
| Bw | | 0.110 | | 1.300 | 0.0010 | 0.10 | | | 0.100 | |
| Bx | | | | | 0.0010 | | 0.0010 | | | |
| Bv | | | | | 0.0030 | | | 0.40 | | |
| Bz | | | 0.800 | | 0.0010 | 0.40 | | | | |
| Baa | | | | | 0.0020 | | | 0.03 | | |
| Bab | | 0.160 | | | 0.0010 | | | | | |
| Bac | 0.100 | 0.050 | | 1.800 | 0.0020 | 0.02 | 0.0020 | | 0.200 | |
| Bad | | | | | 0.0023 | | | | | Comparative Example |
| Bae | | | | | 0.0011 | | | | | |
| Baf | | | | | 0.0200 | | | | | |
| Bag | | | | | 0.0024 | | | | | |
| Bah | | | | | 0.0018 | | | | | |
| Bai | | | | | 0.0035 | | | | | |
| Baj | | | | | 0.0082 | | | | | |
| Bak | | | | | 0.0021 | | | | | |
| Bal | | | | | 0.0100 | | | | | |
| Bam | | | | | 0.0400 | | | | | |

**[Table 4C]**

| Component | Component composition (mass%), remainder: Fe and impurities | | | | | | | | | | Note |
|---|---|---|---|---|---|---|---|---|---|---|---|
| | Cu | w | Ta | Sn | Sb | As | Mg | Ca | Zr | REM | |
| Ba | | | | | | | | | | | Invention Example |
| Bb | | | | | | | | | | | |
| Be | | | | | | | | | | | |
| Bd | | | | | | | | | | | |
| Be | | | | | | | | | | | |
| Bf | | | | | | | | | | | |
| Bg | | | | | | | | | | | |
| Bh | | | | | | | | | | | |
| Bi | | | | | 0.020 | | | | | | |
| Bj | | | | | | | | | | | |
| Bk | | | | | | | | | | | |
| Bl | 0.1 | | | | | | | | | | |
| Bm | | | 0.020 | | | | | | | | |
| Bn | | | | | | | | | | | |
| Bo | | | | 0.020 | | | | | | | |
| Bp | | | | | | | | | 0.030 | | |
| Bq | 0.2 | | | | | | | | | | |
| Br | | 0.010 | | 0.042 | | 0.010 | | 0.003 | | 0.050 | |
| Bs | | | 0.010 | | 0.010 | | | | 0.010 | | |
| Bt | | | | | | | | | | | |
| Bu | | | | | | 0.021 | | 0.003 | | | |
| Bv | | | | | | | | | | | |
| Bw | | 0.010 | | | | | 0.010 | 0.009 | | | |
| Bx | 0.4 | | | | | | | | 0.026 | | |
| By | | | | | | 0.041 | | | | | |
| Bz | | | 0.010 | | 0.030 | | | 0.042 | | | |
| Baa | | | | 0.033 | | | | 0.025 | | | |
| Bab | | | | | | | | | | | |
| Bac | | | 0.080 | 0.021 | 0.010 | | 0.038 | 0.002 | 0.020 | 0.010 | |
| Bad | | | | | | | | | | | Comparative Example |
| Bae | | | | | | | | | | | |
| Baf | | | | | | | | | | | |
| Bag | | | | | | | | | | | |
| Bah | | | | | | | | | | | |
| Bai | | | | | | | | | | | |
| Baj | | | | | | | | | | | |
| Bak | | | | | | | | | | | |
| Bal | | | | | | | | | | | |
| Bam | | | | | | | | | | | |

**[Table 5A]**

| Test No. | Component | Hot rolling process | | | Coiling process | Holding process | Cooling process | Note |
|---|---|---|---|---|---|---|---|---|
| | | Finish rolling start temperature (°C) | Final stand temperature (°C) | Final stand plate thickness reduction rate (%) | Coiling temperature (°C) | Holding time (hr) | Average cooling rate (°C/s) | |
| B1 | Ba | 1092 | 853 | 38 | 643 | 7 | 0.7 | Invention Example |
| B2 | Ba | 1046 | 876 | 50 | 515 | 8 | 0.5 | |
| B3 | Ba | 1020 | 859 | 35 | 600 | 3 | 0.4 | |
| B4 | Bb | 1044 | 858 | 36 | 590 | 7 | 0.3 | |
| B5 | Bb | 1052 | 877 | 51 | 545 | 5 | 0.4 | |
| B6 | Bb | 1044 | 890 | 44 | 618 | 4 | 0.3 | |
| B7 | Bc | 1039 | 882 | 52 | 595 | 3 | 0.3 | |
| B8 | Bc | 1031 | 875 | 44 | 562 | 5 | 1.3 | |
| B9 | Bd | 1067 | 845 | 51 | 545 | 6 | 0.4 | |
| B10 | Be | 1029 | 845 | 34 | 573 | 6 | 0.7 | |
| B11 | Bf | 1046 | 833 | 51 | 487 | 2 | 4.5 | |
| B12 | Bg | 1068 | 880 | 47 | 601 | 2 | 0.8 | |
| B13 | Bg | 1057 | 849 | 44 | 521 | 3 | 0.4 | |
| B14 | Bh | 1042 | 859 | 42 | 601 | 3 | 0.5 | |
| B15 | Bi | 1050 | 852 | 47 | 506 | 5 | 10.2 | |
| B16 | Bj | 1033 | 857 | 39 | 489 | 4 | 0.9 | |
| B17 | Bk | 993 | 830 | 44 | 511 | 2 | 0.9 | |
| B18 | Bk | 1062 | 849 | 42 | 502 | 4 | 0.9 | |
| B19 | Bl | 1056 | 880 | 42 | 614 | 7 | 0.8 | |
| B20 | Bl | 1061 | 866 | 38 | 554 | 7 | 0.6 | |
| B21 | Bm | 1056 | 880 | 45 | 535 | 2 | 0.4 | |
| B22 | Bn | 1012 | 875 | 35 | 564 | 6 | 0.7 | |
| B23 | Bo | 1001 | 891 | 49 | 502 | 4 | 0.9 | |
| B24 | Bp | 1066 | 884 | 49 | 543 | 2 | 0.2 | |
| B25 | Bq | 1057 | 849 | 39 | 517 | 4 | 0.9 | |
| B26 | Br | 1048 | 865 | 49 | 514 | 7 | 0.5 | |
| B27 | Bs | 1045 | 842 | 33 | 595 | 5 | 0.8 | |
| B28 | Bt | 1036 | 873 | 40 | 468 | 4 | 0.5 | |
| B29 | Bu | 1028 | 886 | 48 | 510 | 2 | 0.5 | |
| B30 | Bv | 986 | 862 | 36 | 528 | 4 | 0.7 | |

**[Table 5B]**

| Test No. | Component | Hot rolling process | | | Coiling process | Holding process | Cooling process | Note |
|---|---|---|---|---|---|---|---|---|
| | | Finish rolling start temperature (°C) | Final stand temperature (°C) | Final stand plate thickness reduction rate (%) | Coiling temperature (°C) | Holding time (hr) | Average cooling rate (°C/s) | |
| B31 | Bw | 1010 | 859 | 49 | 502 | 6 | 0.3 | Invention Example |
| B32 | Bx | 1034 | 845 | 35 | 517 | 5 | 0.8 | |
| B33 | By | 1029 | 836 | 43 | 566 | 5 | 0.6 | |
| B34 | Bz | 1055 | 844 | 37 | 596 | 3 | 0.3 | |
| B35 | Baa | 1034 | 841 | 46 | 624 | 5 | 0.7 | |
| B36 | Bab | 1046 | 880 | 42 | 568 | 5 | 0.2 | |
| B37 | Bac | 1013 | 879 | 50 | 578 | 2 | 0.6 | |
| B38 | Bad | - | 892 | 41 | 611 | 4 | 0.4 | Comparative Example |
| B39 | Bae | - | 886 | 38 | 639 | 4 | 0.7 | |
| B40 | Baf | - | 892 | 41 | 621 | 4 | 1.0 | |
| B41 | Bag | - | 837 | 31 | 570 | 6 | 0.6 | |
| B42 | Bah | - | 869 | 42 | 599 | 6 | 0.4 | |
| B43 | Bai | - | 855 | 32 | 571 | 5 | 0.7 | |
| B44 | Baj | - | 858 | 52 | 535 | 5 | 0.3 | |
| B45 | Bak | - | 850 | 43 | 482 | 2 | 0.9 | |
| B46 | Bal | - | 878 | 45 | 501 | 3 | 0.5 | |
| B47 | Bam | - | 875 | 34 | 567 | 7 | 0.2 | |
| B48 | Ba | - | 910 | 39 | 643 | 5 | 0.5 | Comparative Example |
| B49 | Ba | - | 853 | 18 | 643 | 5 | 0.8 | |
| B50 | Ba | - | 853 | 39 | 433 | 5 | 0.6 | |
| B51 | Ba | - | 853 | 39 | 672 | 6 | 0.6 | |
| B52 | Bg | - | 849 | 44 | 521 | 9 | 0.8 | |
| B53 | Bg | - | 849 | 44 | 521 | 3 | 0.08 | |
| B54 | Bk | - | 830 | 44 | 511 | 2 | 0.4 | |
| B55 | Bk | - | 830 | 44 | 511 | 6 | 0.1 | |
| B56 | Bl | 1055 | 866 | 38 | 554 | 7 | 0.6 | Invention |
| | | | | | | | | Example |
| B57 | Bl | 1050 | 866 | 38 | 554 | 5 | 0.6 | Invention Example |
| B58 | Bl | - | 866 | 38 | 554 | 3 | 0.6 | Comparative Example |
| B59 | Bl | - | 866 | 38 | 554 | 5 | 0.6 | |
| B60 | Bl | - | 866 | 38 | 554 | 4 | 0.6 | |

**[Table 5C]**

| Test No. | Cold rolling process | Continuous annealing process | | | | | Note |
|---|---|---|---|---|---|---|---|
| | Plate thickness reduction rate (%) | Dew point (°C) | Heating temperature (°C) | Holding time (s) | Plating | Alloying | |
| B1 | 66 | 0 | 782 | 265 | Yes | Yes | Invention Example |
| B2 | 57 | -14 | 787 | 220 | Yes | No | |
| B3 | 59 | 14 | 799 | 131 | No | No | |
| B4 | 36 | -9 | 850 | 270 | Yes | Yes | |
| B5 | 31 | 13 | 856 | 145 | No | No | |
| B6 | 57 | -9 | 837 | 169 | Yes | No | |
| B7 | 32 | 9 | 831 | 125 | No | No | |
| B8 | 70 | -7 | 803 | 93 | Yes | Yes | |
| B9 | 42 | 12 | 856 | 140 | No | No | |
| B10 | 37 | -14 | 823 | 286 | Yes | Yes | |
| B11 | 30 | 11 | 760 | 101 | No | No | |
| B12 | 66 | 11 | 799 | 112 | Yes | Yes | |
| B13 | 72 | -10 | 788 | 157 | Yes | Yes | |
| B14 | 33 | -11 | 854 | 182 | Yes | No | |
| B15 | 52 | 6 | 823 | 215 | No | No | |
| B16 | 42 | 5 | 823 | 208 | Yes | Yes | |
| B17 | 38 | 13 | 847 | 191 | No | No | |
| B18 | 67 | 8 | 793 | 183 | No | No | |
| B19 | 40 | 8 | 853 | 102 | Yes | Yes | |
| B20 | 35 | -5 | 831 | 73 | Yes | Yes | |
| B21 | 42 | 5 | 811 | 117 | No | No | |
| B22 | 63 | 0 | 810 | 96 | No | No | |
| B23 | 42 | 5 | 814 | 224 | Yes | Yes | |
| B24 | 52 | 0 | 836 | 201 | Yes | Yes | |
| B25 | 46 | 15 | 803 | 103 | No | No | |
| B26 | 50 | 2 | 821 | 199 | Yes | Yes | |
| B27 | 34 | -9 | 839 | 160 | No | No | |
| B28 | 35 | -3 | 793 | 128 | No | No | |
| B29 | 73 | -14 | 832 | 204 | Yes | Yes | |
| B30 | 63 | -6 | 811 | 75 | Yes | Yes | |

**[Table 5D]**

| Test No. | Cold rolling process | Continuous annealing process | | | | | Note |
|---|---|---|---|---|---|---|---|
| | Plate thickness reduction rate (%) | Dew point (°C) | Heating temperature (°C) | Holding time (s) | Plating | Alloying | |
| B31 | 50 | 2 | 788 | 195 | Yes | Yes | Invention Example |
| B32 | 61 | 14 | 785 | 244 | Yes | Yes | |
| B33 | 43 | -5 | 859 | 285 | Yes | Yes | |
| B34 | 55 | -8 | 829 | 204 | Yes | Yes | |
| B35 | 30 | -6 | 771 | 168 | Yes | Yes | |
| B36 | 33 | -13 | 753 | 100 | No | No | |
| B37 | 49 | 0 | 824 | 167 | No | No | |
| B38 | 48 | -3 | 870 | 293 | No | No | Comparative Example |
| B39 | 75 | -9 | 812 | 141 | Yes | Yes | |
| B40 | 69 | 0 | 858 | 227 | Yes | Yes | |
| B41 | 63 | -9 | 819 | 67 | No | No | |
| B42 | 61 | 8 | 794 | 240 | No | No | |
| B43 | 40 | 5 | 850 | 179 | Yes | Yes | |
| B44 | 56 | 7 | 817 | 130 | Yes | No | |
| B45 | 25 | 6 | 783 | 202 | Yes | Yes | |
| B46 | 74 | -13 | 840 | 231 | Yes | Yes | |
| B47 | 76 | -5 | 819 | 85 | Yes | No | |
| B48 | 61 | -14 | 840 | 198 | Yes | No | Comparative Example |
| B49 | 36 | -13 | 830 | 242 | Yes | No | |
| B50 | 43 | -14 | 835 | 275 | No | No | |
| B51 | 72 | 7 | 801 | 116 | Yes | No | |
| B52 | 39 | 13 | 786 | 184 | Yes | Yes | |
| B53 | 43 | -10 | 802 | 192 | Yes | Yes | |
| B54 | 10 | -13 | 790 | 94 | Yes | Yes | |
| B55 | 90 | -13 | 823 | 237 | Yes | No | |
| B56 | 35 | -20 | 840 | 266 | Yes | Yes | Invention Example |
| B57 | 35 | 20 | 868 | 132 | Yes | Yes | Invention Example |
| B58 | 35 | -5 | 720 | 200 | No | No | Comparative Example |
| B59 | 35 | -5 | 930 | 200 | No | No | |
| B60 | 35 | -5 | 800 | 40 | No | No | |

In a metal structure (ferrite, bainite, martensite, tempered martensite, pearlite and retained austenite (residual γ)) in a range of 1/8 to 3/8 of the thickness centering on the position of 1/4 of the plate thickness (a 1/4 part of the plate thickness) from the surface of these steel plates, in a 1/4 part of the plate thickness, a ratio (N₃/N_{T}) of the number N₃ of crystal grains of the ferrite and the bainite having an area of 3 µm² or less to a total number N_{T} of crystal grains of the ferrite and the bainite, a ratio (N₃₀/N_{T}) of the number N₃₀ of crystal grains of the ferrite and the bainite having an area of 30 µm² or more to a total number N_{T} of crystal grains of the ferrite and the bainite, a difference ΔMn between an Mn concentration at a position of 1.0 µm from an interface between ferrite and martensite in a direction perpendicular to the interface and inward into ferrite grains and the maximum Mn concentration in a region up to 0.5 µm therefrom, the average aspect ratio of ferrite and bainite having an area of 3 µm² or less in a 1/4 part of the plate thickness, and Cs/C4t of the average carbon concentration Cs (mass%) at a depth position of 10 µm in the plate thickness direction from the surface of the steel plate to the average carbon concentration C4t (mass%) at a position at a depth of 1/4 in the plate thickness direction from the surface of the steel plate were evaluated and shown in Table 6A to Table 6D. These evaluations were performed according to the above methods.

In addition, the tensile strength (TS1), the uniform elongation (uEl), the local elongation (lEl), the tensile strength (TS2) of the tensile test piece with a punched hole, and the bendability of these steel plates were evaluated and shown in Table 6E and Table 6F. These evaluation methods are as follows.

A JIS No. 5 test piece was collected from the steel plate, a tensile test was performed according to JIS Z 2241: 2011 so that the longitudinal direction was perpendicular to the rolling direction of the steel plate, and thereby the tensile strength (TS1) of the steel plate was evaluated. A steel plate having a tensile strength (TS1) of 890 MPa or more (preferably 900 MPa or more) was determined to be satisfactory in terms of tensile strength.

A JIS No. 5 test piece was collected from the steel plate, a tensile test was performed according to JIS Z 2241: 2011 so that the longitudinal direction was perpendicular to the rolling direction of the steel plate, and thereby the elongations (uEl, lEl) of the steel plate were evaluated. A steel plate having a uniform elongation (uEl) of 5.5% or more and a local elongation (1E1) of 3.2% or more (preferably 3.3% or more) was determined to be satisfactory in terms of formability.

A JIS No. 5 test piece was collected from a steel plate so that the longitudinal direction was perpendicular to the rolling direction of the steel plate, a 10 mmϕ hole was punched in the center of the parallel part with a clearance of 10%, a tensile test was performed according to JIS Z 2241: 2011, and thereby the tensile strength (TS2) of the tensile test piece with a punched hole was evaluated. TS2/TS1 was determined from the obtained TS2, and one having a value of 0.50 or more was determined to be satisfactory in terms of breaking resistance.

The bendability was evaluated by obtaining the maximum bending angle according to a bending test based on the VDA standard (VDA238-100) specified in German Association of the Automotive Industry. In this example, the maximum bending angle α(°) was obtained by converting the displacement at the maximum load obtained in the bending test into an angle based on the VDA standard. If the maximum bending angle α was 60.0° or more, it was determined to be a more preferable form with excellent bendability. Here, the test piece in the bending test had a size: 30 mm×60 mm (with a side of 30 mm parallel to the rolling direction), and a plate thickness: 1.4 mm (1.4 mm or less was determined based on the VDA standard), and measurement conditions for the bending test were as follows: a bending ridge line: direction parallel to the rolling direction, a roller diameter: ϕ30 mm, a punch shape: tip R=0.4 mm, a distance between rollers: 3.3 mm (here, in the standard, plate thickness×2+0.5 mm), and a pushing speed: 20 mm/min.

**[Table 6A]**

| Test No. | Component | Structure proportion (area proportion) | | | Note |
|---|---|---|---|---|---|
| | | Ferrite and bainite (%) | Martensite and tempered martensite (%) | Pearlite and residual γ (%) | |
| B1 | Ba | 55 | 45 | 0 | Invention Example |
| B2 | Ba | 59 | 41 | 0 | |
| B3 | Ba | 51 | 49 | 0 | |
| B4 | Bb | 37 | 63 | 0 | |
| B5 | Bb | 33 | 67 | 0 | |
| B6 | Bb | 45 | 55 | 0 | |
| B7 | Be | 36 | 64 | 0 | |
| B8 | Be | 55 | 45 | 0 | |
| B9 | Bd | 23 | 77 | 0 | |
| B10 | Be | 51 | 40 | 9 | |
| B11 | Bf | 55 | 45 | 0 | |
| B12 | Bg | 42 | 58 | 0 | |
| B13 | Bg | 48 | 52 | 0 | |
| B14 | Bh | 30 | 70 | 0 | |
| B15 | Bi | 31 | 69 | 0 | |
| B16 | Bj | 39 | 61 | 0 | |
| B17 | Bk | 22 | 78 | 0 | |
| B18 | Bk | 54 | 46 | 0 | |
| B19 | Bl | 25 | 75 | 0 | |
| B20 | Bl | 38 | 62 | 0 | |
| B21 | Bm | 30 | 70 | 0 | |
| B22 | Bn | 36 | 64 | 0 | |
| B23 | Bo | 25 | 75 | 0 | |
| B24 | Bp | 22 | 78 | 0 | |
| B25 | Bq | 49 | 42 | 9 | |
| B26 | Br | 49 | 41 | 10 | |
| B27 | Bs | 30 | 70 | 0 | |
| B28 | Bt | 58 | 42 | 0 | |
| B29 | Bu | 43 | 57 | 0 | |
| B30 | Bv | 33 | 67 | 0 | |

**[Table 6B]**

| Test No. | Component | Structure proportion (area proportion) | | | Note |
|---|---|---|---|---|---|
| | | Ferrite and bainite (%) | Martensite and tempered martensite (%) | Pearlite and residual γ (%) | |
| B31 | Bw | 57 | 43 | 0 | Invention Example |
| B32 | Bx | 55 | 45 | 0 | |
| B33 | By | 47 | 53 | 0 | |
| B34 | Bz | 39 | 61 | 0 | |
| B35 | Baa | 55 | 45 | 0 | |
| B36 | Bab | 55 | 45 | 0 | |
| B37 | Bac | 47 | 53 | 0 | |
| B38 | Bad | 73 | 27 | 0 | Comparative Example |
| B39 | Bae | 9 | 91 | 0 | |
| B40 | Baf | 45 | 55 | 0 | |
| B41 | Bag | 58 | 34 | 8 | |
| B42 | Bah | 5 | 95 | 0 | |
| B43 | Bai | 12 | 88 | 0 | |
| B44 | Baj | 35 | 65 | 0 | |
| B45 | Bak | 23 | 77 | 0 | |
| B46 | Bal | 18 | 82 | 0 | |
| B47 | Bam | 32 | 68 | 0 | |
| B48 | Ba | 25 | 75 | 0 | Comparative Example |
| B49 | Ba | 31 | 69 | 0 | |
| B50 | Ba | Could not be cold-rolled due to an increase in cold rolling load | | | |
| B51 | Ba | 50 | 50 | 0 | |
| B52 | Bg | 49 | 51 | 0 | |
| B53 | Bg | 40 | 60 | 0 | |
| B54 | Bk | 56 | 44 | 0 | |
| B55 | Bk | Could not be cold-rolled due to an increase in cold rolling load | | | |
| B56 | Bl | 33 | 67 | 0 | Invention Example |
| B57 | Bl | 16 | 84 | 0 | Invention Example |
| B58 | Bl | 100 | 0 | 0 | Comparative Example |
| B59 | Bl | 0 | 100 | 0 | |
| B60 | Bl | 56 | 37 | 7 | |

**[Table 6C]**

| Test No. | Component | Properties of structure | | | | Properties of surface layer | | | Note |
|---|---|---|---|---|---|---|---|---|---|
| | | N₃/N_{T} (%) | N₃₀/N_{T} (%) | Average aspect ratio | ΔMn (mass%) | Average carbon concentration Cs at position of 10 µm (mass%) | Average carbon concentration C4t at position of 1/4 of plate thickness (mass%) | Cs/C4t | |
| B1 | Ba | 73 | 1 | 1.5 | 0.42 | 0.0028 | 0.07 | 0.040 | Invention Example |
| B2 | Ba | 83 | 0 | 1.8 | 0.38 | 0.0210 | 0.07 | 0.300 | |
| B3 | Ba | 45 | 2 | 1.8 | 0.72 | 0.0014 | 0.07 | 0.020 | |
| B4 | Bb | 53 | 2 | 1.2 | 0.58 | 0.0070 | 0.07 | 0.100 | |
| B5 | Bb | 81 | 0 | 1.1 | 0.46 | 0.0014 | 0.07 | 0.020 | |
| B6 | Bb | 54 | 2 | 1.5 | 0.58 | 0.0116 | 0.07 | 0.166 | |
| B7 | Bc | 79 | 1 | 1.3 | 0.46 | 0.0023 | 0.08 | 0.028 | |
| B8 | Bc | 77 | 1 | 1.7 | 0.44 | 0.0115 | 0.08 | 0.143 | |
| B9 | Bd | 91 | 0 | 1.4 | 0.40 | 0.0021 | 0.09 | 0.023 | |
| B10 | Be | 41 | 3 | 1.2 | 0.76 | 0.0240 | 0.12 | 0.200 | |
| B11 | Bf | 94 | 0 | 1.3 | 0.38 | 0.0027 | 0.10 | 0.027 | |
| B12 | Bg | 79 | 1 | 1.8 | 0.38 | 0.0032 | 0.12 | 0.026 | |
| B13 | Bg | 83 | 0 | 1.6 | 0.38 | 0.0268 | 0.12 | 0.223 | |
| B14 | Bh | 85 | 0 | 1.3 | 0.36 | 0.0290 | 0.10 | 0.290 | |
| B15 | Bi | 88 | 0 | 1.6 | 0.36 | 0.0035 | 0.12 | 0.029 | |
| B16 | Bj | 68 | 1 | 1.4 | 0.50 | 0.0037 | 0.12 | 0.031 | |
| B17 | Bk | 76 | 1 | 1.3 | 0.46 | 0.0021 | 0.10 | 0.021 | |
| B18 | Bk | 81 | 0 | 1.5 | 0.44 | 0.0027 | 0.10 | 0.027 | |
| B19 | Bl | 55 | 2 | 1.2 | 0.64 | 0.0035 | 0.11 | 0.032 | |
| B20 | Bl | 49 | 2 | 1.1 | 0.70 | 0.0127 | 0.11 | 0.116 | |
| B21 | Bm | 69 | 1 | 1.3 | 0.48 | 0.0044 | 0.12 | 0.037 | |
| B22 | Bn | 48 | 2 | 1.5 | 0.62 | 0.0069 | 0.12 | 0.058 | |
| B23 | Bo | 69 | 1 | 1.4 | 0.48 | 0.0042 | 0.14 | 0.030 | |
| B24 | Bp | 73 | 1 | 1.2 | 0.42 | 0.0068 | 0.15 | 0.045 | |
| B25 | Bq | 77 | 1 | 1.2 | 0.44 | 0.0031 | 0.15 | 0.021 | |
| B26 | Br | 68 | 1 | 1.6 | 0.44 | 0.0035 | 0.09 | 0.038 | |
| B27 | Bs | 54 | 2 | 1.4 | 0.60 | 0.0153 | 0.09 | 0.170 | |
| B28 | Bt | 48 | 2 | 1.4 | 0.62 | 0.0070 | 0.10 | 0.070 | |
| B29 | Bu | 63 | 1 | 1.5 | 0.50 | 0.0390 | 0.13 | 0.300 | |
| B30 | Bv | 57 | 2 | 1.3 | 0.52 | 0.0174 | 0.13 | 0.134 | |

**[Table 6D]**

| Test No. | Componen t | Properties of structure | | | | Properties of surface layer | | | Note |
|---|---|---|---|---|---|---|---|---|---|
| | | N₃/N T(%) | N₃₀/N T(%) | Averag e aspect ratio | ΔMn (mass%) | Average carbon concentratio n Cs at position of 10 µm (mass%) | Average carbon concentratio n C4t at position of 1/4 of plate thickness (mass%) | Cs/C4t | |
| B3 1 | Bw | 84 | 0 | 1.0 | 0.40 | 0.0058 | 0.15 | 0.039 | Invention Example |
| B3 2 | Bx | 54 | 2 | 1.3 | 0.56 | 0.0015 | 0.08 | 0.019 | |
| B3 3 | By | 79 | 1 | 1.1 | 0.46 | 0.0082 | 0.12 | 0.069 | |
| B3 4 | Bz | 72 | 1 | 1.5 | 0.50 | 0.0161 | 0.13 | 0.124 | |
| B3 5 | Baa | 82 | 0 | 1.2 | 0.46 | 0.0085 | 0.09 | 0.094 | |
| B3 6 | Bab | 49 | 2 | 1.4 | 0.62 | 0.0160 | 0.10 | 0.160 | |
| B3 7 | Bac | 81 | 0 | 1.4 | 0.42 | 0.0067 | 0.14 | 0.048 | |
| B3 8 | Bad | 41 | 3 | 1.2 | 0.82 | 0.0027 | 0.05 | 0.054 | Comparativ e Example |
| B3 9 | Bae | 47 | 2 | 1.6 | 0.68 | 0.0306 | 0.17 | 0.180 | |
| B4 0 | Baf | 76 | 1 | 1.8 | 0.48 | 0.0052 | 0.12 | 0.044 | |
| B4 1 | Bag | 45 | 2 | 1.3 | 0.72 | 0.0331 | 0.12 | 0.276 | |
| B4 2 | Bah | 67 | 1 | 1.7 | 0.46 | 0.0030 | 0.12 | 0.025 | |
| B4 3 | Bai | 63 | 1 | 1.5 | 0.54 | 0.0039 | 0.12 | 0.032 | |
| B4 4 | Baj | 82 | 0 | 1.5 | 0.46 | 0.0037 | 0.12 | 0.031 | |
| B4 5 | Bak | 76 | 1 | 1.1 | 0.48 | 0.0035 | 0.12 | 0.029 | |
| B4 6 | Bal | 73 | 1 | 1.9 | 0.48 | 0.0408 | 0.12 | 0.340 | |
| B4 7 | Bam | 69 | 1 | 1.8 | 0.52 | 0.0132 | 0.12 | 0.110 | |
| B4 8 | Ba | 38 | 3 | 1.7 | 0.78 | 0.0530 | 0.07 | 0.757 | Comparativ e Example |
| B4 9 | Ba | 29 | 3 | 1.1 | 1.10 | 0.0490 | 0.07 | 0.700 | |
| B5 0 | Ba | Could not be cold-rolled due to an increase in cold rolling load | | | | | | | |
| B5 1 | Ba | 38 | 13 | 2.3 | 0.82 | 0.0021 | 0.07 | 0.030 | |
| B5 2 | Bg | 76 | 8 | 2.1 | 0.46 | 0.0024 | 0.12 | 0.020 | |
| B5 3 | Bg | 78 | 6 | 2.2 | 0.42 | 0.0240 | 0.12 | 0.200 | |
| B5 4 | Bk | 23 | 4 | 2.3 | 1.28 | 0.0700 | 0.10 | 0.700 | |
| B5 5 | Bk | Could not be cold-rolled due to an increase in cold rolling load | | | | | | | |
| B5 6 | Bl | 49 | 2 | 1.2 | 0.34 | 0.1100 | 0.11 | 1.000 | Invention Example |
| B5 7 | Bl | 51 | 2 | 1.2 | 0.34 | 0.00011 | 0.11 | 0.001 | Invention Example |
| B5 8 | Bl | 100 | 0 | 5.0 | 0.34 | 0.0084 | 0.11 | 0.076 | Comparativ e Example |
| B5 9 | Bl | 0 | 5 | - | - | 0.0085 | 0.11 | 0.077 | |
| B6 0 | B1 | 48 | 3 | 1.4 | 0.53 | 0.0900 | 0.11 | 0.818 | |

**[Table 6E]**

| Test No. | Component | Properties | | | | | | Note |
|---|---|---|---|---|---|---|---|---|
| | | Tensile strength TS1 (MPa) | Uniform elongation uEl (%) | Local elongation lEl (%) | Tensile strength TS2 (MPa) | TS2/TS1 | Bending angle α(°) | |
| B1 | Ba | 970 | 9.9 | 6.2 | 757 | 0.78 | 94.8 | Invention Example |
| B2 | Ba | 981 | 9.4 | 6.4 | 821 | 0.84 | 82.7 | |
| B3 | Ba | 1007 | 11.4 | 3.6 | 613 | 0.61 | 102.9 | |
| B4 | Bb | 1056 | 9.4 | 4.3 | 703 | 0.67 | 77.5 | |
| B5 | Bb | 1069 | 8.2 | 5.1 | 864 | 0.81 | 96.1 | |
| B6 | Bb | 1028 | 10.1 | 4.3 | 679 | 0.66 | 78.6 | |
| B7 | Be | 1093 | 8.6 | 5.0 | 863 | 0.79 | 86.2 | |
| B8 | Bc | 1028 | 9.8 | 5.6 | 799 | 0.78 | 79.1 | |
| B9 | Bd | 1172 | 7.3 | 4.9 | 1018 | 0.87 | 81.7 | |
| B10 | Be | 1100 | 10.5 | 3.7 | 667 | 0.61 | 70.2 | |
| B11 | Bf | 1079 | 9.2 | 6.9 | 973 | 0.90 | 88.5 | |
| B12 | Bg | 1214 | 8.4 | 5.7 | 996 | 0.82 | 75.4 | |
| B13 | Bg | 1193 | 8.6 | 6.1 | 1006 | 0.84 | 60.6 | |
| B14 | Bh | 1183 | 7.1 | 5.8 | 1040 | 0.88 | 61.0 | |
| B15 | Bi | 1248 | 7.4 | 5.6 | 1100 | 0.88 | 70.5 | |
| B16 | Bj | 1223 | 9.1 | 4.7 | 891 | 0.73 | 71.7 | |
| B17 | Bk | 1208 | 7.7 | 4.5 | 941 | 0.78 | 81.1 | |
| B18 | Bk | 1104 | 9.6 | 5.6 | 883 | 0.80 | 86.0 | |
| B19 | Bl | 1231 | 8.8 | 3.6 | 814 | 0.66 | 70.4 | |
| B20 | Bl | 1191 | 9.9 | 3.9 | 759 | 0.64 | 62.9 | |
| B21 | Bm | 1250 | 8.4 | 4.6 | 931 | 0.75 | 66.7 | |
| B22 | Bn | 1230 | 9.8 | 3.8 | 781 | 0.64 | 63.5 | |
| B23 | Bo | 1334 | 8.1 | 4.3 | 990 | 0.74 | 62.0 | |
| B24 | Bp | 1375 | 7.3 | 4.9 | 1090 | 0.79 | 61.0 | |
| B25 | Bq | 1180 | 9.1 | 5.8 | 941 | 0.80 | 83.9 | |
| B26 | Br | 958 | 9.4 | 5.4 | 717 | 0.75 | 96.7 | |
| B27 | Bs | 1148 | 9.1 | 3.8 | 756 | 0.66 | 65.7 | |
| B28 | Bt | 1091 | 11.2 | 4.5 | 696 | 0.64 | 75.8 | |
| B29 | Bu | 1245 | 9.4 | 4.7 | 884 | 0.71 | 60.1 | |
| B30 | Bv | 1275 | 8.8 | 4.4 | 880 | 0.69 | 31.2 | |

**[Table 6F]**

| Test No. | Component | Properties | | | | | | Note |
|---|---|---|---|---|---|---|---|---|
| | | Tensile strength TS1 (MPa) | Uniform elongation uE1 (%) | Local elongation 1E1 (%) | Tensile strength TS2 (MPa) | TS2/TS1 | Bending angle α (°) | |
| B31 | Bw | 1273 | 8.8 | 6.7 | 1100 | 0.86 | 63.8 | Invention Example |
| B32 | Bx | 1028 | 10.6 | 4.9 | 689 | 0.67 | 102.4 | |
| B33 | By | 1196 | 9.1 | 5.6 | 958 | 0.80 | 65.4 | |
| B34 | Bz | 1256 | 9.2 | 4.6 | 930 | 0.74 | 60.4 | |
| B35 | Baa | 1013 | 10.6 | 6.3 | 816 | 0.81 | 82.6 | |
| B36 | Bab | 971 | 13.8 | 5.5 | 622 | 0.64 | 85.3 | |
| B37 | Bac | 1266 | 8.9 | 5.7 | 1032 | 0.82 | 62.0 | |
| B38 | Bad | 669 | 14.9 | 5.3 | 382 | 0.57 | 81.8 | Comparative Example |
| B39 | Bae | 1414 | 10.1 | 3.5 | 661 | 0.47 | 42.7 | |
| B40 | Baf | 1213 | 9.6 | 4.8 | 549 | 0.45 | 59.1 | |
| B41 | Bag | 836 | 11.8 | 4.6 | 582 | 0.70 | 56.7 | |
| B42 | Bah | 1211 | 9.4 | 1.2 | 516 | 0.43 | 77.3 | |
| B43 | Bai | 1312 | 7.7 | 3.5 | 522 | 0.40 | 63.3 | |
| B44 | Baj | 1242 | 8.6 | 4.8 | 563 | 0.45 | 70.4 | |
| B45 | Bak | 1279 | 7.8 | 4.5 | 521 | 0.41 | 68.1 | |
| B46 | Bal | 1293 | 7.9 | 3.9 | 560 | 0.43 | 51.1 | |
| B47 | Bam | 1256 | 9.1 | 4.1 | 513 | 0.41 | 58.2 | |
| B48 | Ba | 1098 | 9.6 | 2.9 | 542 | 0.49 | 68.6 | Comparative Example |
| B49 | Ba | 1076 | 10.3 | 2.8 | 500 | 0.46 | 71.0 | |
| B50 | Ba | Could not be cold-rolled due to an increase in cold rolling load | | | | | | |
| B51 | Ba | 1012 | 11.8 | 3.1 | 489 | 0.48 | 94.1 | |
| B52 | Bg | 1189 | 9.8 | 5.0 | 499 | 0.42 | 83.7 | |
| B53 | Bg | 1219 | 8.9 | 5.0 | 532 | 0.44 | 68.3 | |
| B54 | Bk | 1099 | 7.2 | 2.3 | 476 | 0.43 | 68.6 | |
| B55 | Bk | Could not be cold-rolled due to an increase in cold rolling load | | | | | | |
| B56 | Bl | 1173 | 9.5 | 3.7 | 694 | 0.59 | 58.3 | Invention Example |
| B57 | Bl | 890 | 8.4 | 3.2 | 688 | 0.77 | 118.0 | Invention Example |
| B58 | Bl | 434 | 4.0 | 0.2 | 212 | 0.49 | 119.0 | Comparative Example |
| B59 | Bl | 1312 | 42 | 2.3 | 608 | 0.46 | 38.0 | |
| B60 | Bl | 833 | 4.5 | 3.4 | 538 | 0.65 | 45.5 | |

It was found that, in invention examples (Test Nos. B1 to B37, B56, and 57) that satisfied both the component composition and production conditions, all the structure ratio of the metal structure, features of the structure, and features and properties of the surface layer were within the scope of the invention, and steel plates that simultaneously satisfied having high levels of formability and breaking resistance were obtained.

On the other hand, in comparative examples (Test Nos. B38 to B55, and B58 to B60) in which any one of the component composition and production conditions did not satisfy the scope of the invention, at least one of the structure ratio and features of the structure was outside the scope of the invention, and as a result, any of the properties deteriorated.

Test Nos. B38 to B47 were comparative examples in which the component composition was outside the scope of the invention, but any of the properties deteriorated.

Test Nos. B48 to B55, and B58 to B60 were comparative examples in which any of conditions in the production method was outside the scope of the invention.

In Test No. B48, since the temperature of the hot rolling final stand was too high, a sufficient N₃/N_{T} could not be secured, and as a result, TS2/TS1 and the local elongation, which are indexes of ductility of the punched end surface, deteriorated.

In Test No. B49, since the plate thickness reduction rate in the hot rolling final stand was too small, a large amount of recrystallized grain nucleation sites could not be uniformly dispersed during hot rolling, the structure after annealing was insufficiently refined, a sufficient N₃/N_{T} could not be secured, and additionally, ΔMn also increased. As a result, TS2/TS1 and the local elongation deteriorated.

In Test No. B50, since the coiling temperature was too low, the strength of the hot-rolled plate increased significantly, the cold rolling load increased, and cold rolling could not be performed.

In Test No. B51, since the coiling temperature was too high, a sufficient N₃/N_{T} could not be secured, N₃₀/N_{T} also increased, and as a result, TS2/TS1 and the local elongation deteriorated.

In Test No. B52, since the holding time in the holding process was too long, the concentration of elements such as Mn in the carbide was promoted, the grain size of the structure after annealing became coarse and mixed grains were formed, N₃₀/N_{T} became too high, and as a result, TS2/TS1 deteriorated.

In Test No. B53, since the average cooling rate of the cooling process was too slow, the concentration of elements such as Mn in the carbide was promoted, the grain size of the structure after annealing became coarse and mixed grains were formed, N₃₀/N_{T} became too high, and as a result, TS2/TS1 deteriorated.

In Test No. B54, since the plate thickness reduction rate in the cold rolling process was too small, strain accumulation in the steel plate became insufficient, austenite nucleation sites during annealing became non-uniform, the grain size after annealing became coarse and mixed grains were formed, a sufficient N₃/N_{T} could not be secured, and additionally, ΔMn also increased. As a result, TS2/TS1 and the local elongation deteriorated.

In Test No. B55, since the plate thickness reduction rate in the cold rolling process was too large, cold rolling could not be performed.

In Test No. B58, since the heating temperature in the annealing process was too low, the amount of austenite during heating was small, and martensite and tempered martensite after annealing could not be secured. As a result, the tensile strength TS1 significantly decreased, and both the uniform elongation and local elongation deteriorated.

In Test No. B59, since the heating temperature in the nnealing process was too high, ferrite and bainite after annealing could not be secured. As a result, the area proportion of martensite became excessively high, and TS2/TS 1, uniform elongation, local elongation, and bendability deteriorated.

In Test No. B60, since the holding time in the annealing process was too short, a sufficient amount of austenite was not generated, undissolved carbides remained in austenite, the area proportion of martensite and tempered martensite after annealing was less than 40%, the ductility of each martensite was reduced by undissolved carbides, and thus the tensile strength TS1 and the uniform elongation deteriorated. In addition, since the holding time in the annealing process was short, a decarburized layer was not sufficiently formed, and Cs/C4t was larger than 0.80, which resulting in poor bendability.

### [Industrial Applicability]

According to the present invention, it is possible to obtain a steel plate that simultaneously satisfies having high levels of strength, formability and breaking resistance.

## Claims

1. A steel plate having a component composition containing, in mass%,
C: 0.07 to 0.15%,
Si: 0.01 to 2.0%,
Mn: 1.5 to 3.0%,
P: 0 to 0.020%,
S: 0 to 0.0200%,
Al: 0.001 to 1.000%,
N: 0 to 0.020%,
Co: 0 to 0.500%,
Ni: 0 to 1.000%,
Mo: 0 to 1.000%,
Cr: 0 to 2.000%,
O: 0 to 0.0200%,
Ti: 0 to 0.50%,
B: 0 to 0.0100%,
Nb: 0 to 0.50%,
V: 0 to 0.500%,
Cu: 0 to 0.5%,
W: 0 to 0.100%,
Ta: 0 to 0.100%,
Sn: 0 to 0.050%,
Sb: 0 to 0.050%,
As: 0 to 0.050%,
Mg: 0 to 0.050%,
Ca: 0 to 0.050%,
Zr: 0 to 0.050%, and
REM: 0 to 0.100%, with the remainder being Fe and impurities,
wherein, regarding structure fractions,
an area proportion of ferrite and bainite in total is 10% or more and 60% or less, an area proportion of martensite and tempered martensite in total is 40% or more and 90% or less, and an area proportion of pearlite and retained austenite in total is 0% or more and 10% or less,
a ratio of the number of crystal grains of the ferrite and the bainite having an area of 3 µm² or less to a total number of crystal grains of the ferrite and the bainite is 40% or more,
a proportion of crystal grains of the ferrite and the bainite having an area of 30 µm² or more is 5% or less, and
a difference ΔMn between an Mn concentration at a position of 1.0 µm from an interface of the ferrite and the martensite in a direction perpendicular to the interface inward into the ferrite grains and a maximum Mn concentration in a region up to 0.5 µm from the interface is 1.00 mass% or less.

2. The steel plate according to claim 1,
wherein the average aspect ratio of the crystal grains of the ferrite and the bainite having an area of 3 µm² or less is 1.0 or more and 2.0 or less.

3. The steel plate according to claim 1 of 2,
wherein an average carbon concentration at a depth position of 10 µm in the plate thickness direction from the surface of the steel plate is 0.800 times or less an average carbon concentration at a position at a depth of 1/4 in the plate thickness direction from the surface of the steel plate.

4. The steel plate according to any one of claims 1 to 3,
wherein the component composition contains, in mass%, one or two or more of
Co: 0.010 to 0.500%,
Ni: 0.010 to 1.000%,
Mo: 0.010 to 1.000%,
Cr: 0.001 to 2.000%,
O: 0.0001 to 0.0200%,
Ti: 0.001 to 0.50%,
B: 0.0001 to 0.0100%,
Nb: 0.001 to 0.50%,
V: 0.001 to 0.500%,
Cu: 0.001 to 0.5%,
W: 0.001 to 0.100%,
Ta: 0.001 to 0.100%,
Sn: 0.001 to 0.050%,
Sb: 0.001 to 0.050%,
As: 0.001 to 0.050%,
Mg: 0.0001 to 0.050%,
Ca: 0.001 to 0.050%,
Zr: 0.001 to 0.050%, and
REM: 0.001 to 0.100%.

5. A method for producing an intermediate steel plate, comprising:
a hot rolling process in which a slab having a component composition containing, in mass%,
C: 0.07 to 0.15%,
Si: 0.01 to 2.0%,
Mn: 1.5 to 3.0%,
P: 0 to 0.020%,
S: 0 to 0.0200%,
Al: 0.001 to 1.000%,
N: 0 to 0.020%,
Co: 0 to 0.500%,
Ni: 0 to 1.000%,
Mo: 0 to 1.000%,
Cr: 0 to 2.000%,
O: 0 to 0.0200%,
Ti: 0 to 0.50%,
B: 0 to 0.0100%,
Nb: 0 to 0.50%,
V: 0 to 0.500%,
Cu: 0 to 0.5%,
W: 0 to 0.100%,
Ta: 0 to 0.100%,
Sn: 0 to 0.050%,
Sb: 0 to 0.050%,
As: 0 to 0.050%,
Mg: 0 to 0.050%,
Ca: 0 to 0.050%,
Zr: 0 to 0.050%, and
REM: 0 to 0.100%, with the remainder being Fe and impurities, is hot-rolled in a final finishing stand in a temperature range of 900°C or lower and at a plate thickness reduction rate of 30% or more to obtain a hot-rolled steel plate;
a coiling process in which, after the hot rolling process, the hot-rolled steel plate is coiled at a coiling temperature of 650°C or lower and 450°C or higher;
a holding process in which the hot-rolled steel plate after the coiling process is held in a temperature range from the coiling temperature to (the coiling temperature-50)°C for a holding time of 8 hours or shorter; and
a cooling process in which the hot-rolled steel plate after the holding process is cooled to 300°C at an average cooling rate of 0.10 °C/sec or faster to obtain an intermediate steel plate.

6. A method for producing a steel plate, comprising:
a cold rolling process in which the intermediate steel plate produced according to the method for producing an intermediate steel plate according to claim 5 is cold-rolled at a plate thickness reduction rate of 20% or more and 80% or less to obtain a cold-rolled steel plate; and
an annealing process in which the cold-rolled steel plate is held in an atmosphere with a dew point of -80°C or higher and 20°C or lower in a temperature range of 740°C to 900°C for 60 seconds or longer for annealing.

7. The method for producing a steel plate according to claim 6,
wherein the dew point is higher than -15°C and 20°C or lower.

8. The method for producing a steel plate according to claim 6 of 7,
wherein, in the annealing process,
a coating layer forming process in which a coating layer containing zinc, aluminum, magnesium or an alloy thereof is formed on both surfaces of the steel plate is performed.
